# EUROPÄISCHE PATENTSCHRIFT

(11) **EP 4 550 723 B1**
(45) Veröffentlichungstag und Bekanntmachung des Hinweises auf die Patenterteilung: **24.12.2025**
(21) Anmeldenummer: 24210584.9
(22) Anmeldetag: 04.11.2024
(51) Int. Cl.: H04L 9/40, G08C 17/02, H04W 12/06, H04W 12/50, H04L 9/32, B02C 21/00, B07B 1/00, B07B 13/18, B02C 25/00

(54) **VERFAHREN ZUR AUTHENTIFIZIERUNG EINER DRAHTLOSEN FERNBEDIENUNG ALS TEMPORÄRER TEIL EINER STEUEREINRICHTUNG EINER GESTEINSVERÄNDERUNGSVORRICHTUNG**
METHOD FOR AUTHENTICATING A WIRELESS REMOTE CONTROL AS A TEMPORARY PART OF A CONTROL DEVICE OF A ROCK CHANGING DEVICE
PROCÉDÉ D'AUTHENTIFICATION D'UNE TÉLÉCOMMANDE SANS FIL EN TANT QUE PARTIE TEMPORAIRE D'UN DISPOSITIF DE COMMANDE D'UN DISPOSITIF DE CHANGEMENT DE ROCHE

(30) Priorität: 06.11.2023 DE 102023130685
(43) Veröffentlichungstag der Anmeldung: 07.05.2025
(73) Patentinhaber: KLEEMANN GMBH, 73037 Göppingen (DE)
(72) Erfinder: Koidis, Michael, 73037 Göppingen (DE); Bräuninger, Lukas, 73037 Göppingen (DE)
(74) Vertreter: Ruttensperger Lachnit Trossin Gomoll

(56) Entgegenhaltungen:
- DE-A1- 102021 134 145
- DE-B3- 102022 118 032
- DE-U1- 202004 006 887
- US-A1- 2010 091 103

## Beschreibung

Die vorliegende Erfindung betrifft ein Verfahren zur Authentifizierung einer drahtlosen Fernbedienung als temporärer Teil einer Steuereinrichtung einer Gesteinsveränderungsvorrichtung. Eine Gesteinsveränderungsvorrichtung im Sinne der vorliegenden Anmeldung ist eine Vorrichtung, welche wenigstens einen Zustandsparameter von Gestein verändert. Dies kann in einem einfachen bevorzugten Fall eine Gesteinsfördervorrichtung sein, welche Gestein von einem ersten Ort zu einem zweiten Ort fördert und so die Ortskoordinaten des Gesteins verändert. Dies kann ebenso eine Gesteinsverarbeitungsvorrichtung sein, welche Gestein sortiert, etwa durch Sieben, oder/und welche Gestein strukturell verändert, etwa durch Brechen.

Eine Fernbedienung im Sinne der vorliegenden Anmeldung ist bevorzugt zur Eingabe von Steuerbefehlen ausgebildet. Eine Fernbedienung im Sinne der vorliegenden Anmeldung kann alternativ oder bevorzugt zusätzlich zur Ausgabe, insbesondere optischen Ausgabe, von Betriebsdaten ausgebildet sein. Die Fernbedienung im Sinne der vorliegenden Anmeldung kann daher auch nur zur Ausgabe von Betriebsdaten ausgebildet sein.

Ein Verfahren zur Authentifizierung einer drahtlosen Fernbedienung als temporärer Teil einer Steuereinrichtung einer Gesteinsveränderungsvorrichtung ist von dem Steuerungssystem "SPECTIVE" der Anmelderin bekannt. Das Steuerungssystem "SPECTIVE" der Anmelderin bietet als Erweiterungslösung unter der Bezeichnung "SPECTIVE CONNECT" die Möglichkeit, eine drahtlose Fernbedienung, beispielsweise ein Smartphone, über eine entsprechende App als temporären Teil der Steuereinrichtung der Gesteinsveränderungsvorrichtung zu authentifizieren und nach der Authentifikation zu verwenden.

Bei dem bekannten SPECTIVE-System gibt ein vorrichtungsbasierter Teil der Steuereinrichtung der Gesteinsveränderungsvorrichtung an einem Display einen QR-Code aus, welcher mit einer Kamera eines Smartphones oder eines anderen tragbaren Mobilgeräts gelesen wird. Mit dem QR-Code wird eine Kennung des vom vorrichtungsbasierten Teil der Steuereinrichtung verfügbaren Netzwerks und ein alphanumerisches Passwort als Authentifizierungsinformation übertragen. Die den QR-Code einlesende Fernbedienung, also im vorliegenden Fall ein Smartphone oder ein Tablet-Computer, nutzt die an sie übertragene Netzwerkkennung und das alphanumerische Passwort für einen Aufbau einer Verbindung mit dem vorrichtungsbasierten Teil der Steuereinrichtung. Ohne Kenntnis der Netzwerkkennung und des Passworts kann bestimmungsgemäß eine Kommunikation zwischen der Fernbedienung und dem vorrichtungsbasierten Teil der Steuereinrichtung nicht hergestellt werden. Ohne diese Kommunikation kann die Fernbedienung nicht als Teil der Steuereinrichtung der Gesteinsveränderungsvorrichtung verwendet werden.

Nachteilig an dieser grundsätzlich sehr praktischen Lösung ist das Erfordernis eines qualitativ hochwertigen Monitors aufseiten des vorrichtungsbasierten Teils der Steuereinrichtung, damit dort ein QR-Code lesbar ausgegeben werden kann.

Darüber hinaus arbeiten Gesteinsveränderungsvorrichtungen, welche als Vorrichtungskomponenten in der Regel eine Materialaufgabeeinrichtung zur Beladung mit zu verarbeitendem Gesteinsmaterial, wenigstens eine Fördereinrichtung zur Förderung von Material zwischen zwei Orten oder/und zum Austrag von Gesteinsmaterial, und eine Steuereinrichtung zur Steuerung von Vorrichtungskomponenten der Gesteinsveränderungsvorrichtung umfassen, in einer mit Schmutz und Staub belasteten Umgebung, welche die Ausgabequalität des den QR-Code darstellenden Monitors so weit beeinträchtigen kann, dass der darauf dargestellte QR-Code nicht mehr ohne weiteres fehlerfrei von der Fernbedienung eingelesen werden kann.

Eine gemäß der vorliegenden Erfindung bevorzugte Gesteinsveränderungsvorrichtung ist eine Gesteinsverarbeitungsvorrichtung, welche zusätzlich wenigstens eine Arbeitseinrichtung aus einer Brecheinrichtung und einer Siebeinrichtung umfasst. Die wenigstens eine Fördervorrichtung kann dann zur Förderung von Gesteinsmaterial von der Materialaufgabeeinrichtung zur wenigstens einen Arbeitseinrichtung, von der wenigstens einen Arbeitseinrichtung zu einem Haldenaustrag und gegebenenfalls zur weiteren Förderung von Gesteinsmaterial innerhalb der Gesteinsverarbeitungsvorrichtung ausgebildet sein. Bevorzugt weist eine Gesteinsverarbeitungsvorrichtung mehr als eine Fördervorrichtung auf.

Aus der DE 20 2004 006 887 U1 ist eine Aufbereitungsanlage für mineralische Werkstoffe bekannt, welche Sensoren und Stellglieder aufweist, die über einen Feldbus datenübertragend miteinander verbunden sind. Der Feldbus verfügt über eine Sender-Empfänger-Verbindung, mittels welcher eine Benutzerschnittstelle drahtlos mit dem Feldbus zur Übertragung von Daten zwischen der Benutzerschnittstelle und dem Feldbus verbunden werden kann. Die Benutzerschnittstelle kann über einen Anzeigebildschirm Information über den Betriebszustand einzelner Maschinen der Aufbereitungsanlage ausgeben. Eine Bedienperson kann durch Betätigung entsprechender Schalter und Druckknöpfe der Benutzerschnittstelle auf die Stellglieder der Aufbereitungsanlage einwirken. Die drahtlose Kommunikation der bekannten Anlage kann über Signalstandards von Bluetooth^{®}, WLAN, GPRS, EDGE und UMTS realisiert sein.

Die DE 20 2004 006 887 U1 offenbart keine Einzelheiten über die Kopplung der drahtlosen Benutzerschnittstelle mit dem Feldbus der Maschinen der Aufbereitungsanlage. Da diese Druckschrift jedoch eine bevorzugte Verwendung des Bluetooth^{®}-Standards betont, ist davon auszugehen, dass die Kopplung nach den grundsätzlich bekannten Maßnahmen des Bluetooth^{®}-Standards erfolgen. Diese sind üblicherweise ein Suchen nach kopplungsbereiten Bluetooth^{®}-Geräten in der Umgebung eines Bluetooth^{®}-Geräts, gegebenenfalls eine Ausgabe eines vierstelligen Zifferncodes durch ein Bluetooth^{®}-Gerät und dessen manuelle Eingabe im jeweils anderen Bluetooth^{®}-Gerät, und ein positives Quittieren der Kopplungsanfrage betreffend die Kopplung der beiden Bluetooth^{®}-Geräte.

Aus der EP 3105646 B1 ist ein Verfahren zur Einleitung eines Fernsteuerungsverfahrens eines Fahrzeugs für einen Gesteinsabbau beschrieben. Dieses Verfahren nutzt als Authentifizierungsmittel einen Sicherheitsschlüssel, mit welchem das Fernsteuerungsverfahren am Fahrzeug in Gang gesetzt werden kann. Auf einen Start des Fernsteuerungsverfahrens am Fahrzeug hin, sendet das Fahrzeug an die Fernbedienung eine Meldung, woraufhin das Fahrzeug als in das Sicherheitssystem der Fernbedienung aufgenommen bestätigt wird. Anschließend wird die Fernbedienung konfiguriert, um einen Fernsteuerungsmodus des Fahrzeugs zu starten.

Der aus der der EP 3105646 B1 bekannte Sicherheitsschlüssel ist bevorzugt ein körperlicher Schlüssel, kann jedoch abweichend davon ein elektronischer datenbasierter Schlüssel sein. In das Sicherheitssystem der Fernbedienung können mehrere Fahrzeuge bzw. Arbeitsmaschinen aufgenommen werden, sodass eine Fernbedienung mehr als ein Fahrzeug bzw. mehr als eine Arbeitsmaschine steuern kann.

Aus der US 10663955 B2 ist die Einrichtung einer drahtlosen Kommunikation zwischen mehreren Arbeitsmaschinen eines Abfallwirtschaftssystems bekannt. Die Kommunikation zwischen den Arbeitsmaschinen ist aufgabenbasiert und enthält einen Identifizierer der jeweiligen Tätigkeit.

Insbesondere ausgehend von dem oben beschriebenen SPECTIVE-System ist es Aufgabe der vorliegenden Erfindung, eine technische Lehre bereitzustellen, welche es ermöglicht, auch bei einer nur reduzierten Möglichkeit zur Ausgabe von Authentifizierungsinformation eine ausreichend sichere Authentifizierung der Fernbedienung als Teil der Steuereinrichtung einer Gesteinsveränderungsvorrichtung zu erreichen. Auf Grundlage einer ausreichend sicheren Authentifizierung kann eine drahtlose Kommunikation ins Werk gesetzt werden, über welche Steuerbefehle von der Fernbedienung an die Gesteinsveränderungsvorrichtung übermittelt und von letzterer ausgeführt werden. Alternativ oder zusätzlich können über die drahtlose Kommunikation Betriebsdaten an die Fernbedienung zur Ausgabe durch die Fernbedienung übertragen werden. So kann auch dann eine ausreichend sichere Kopplung zwischen Fernbedienung und Gesteinsveränderungsvorrichtung erreicht werden, wenn die Gesteinsveränderungsvorrichtung Information nur beschränkt ausgeben kann, sei es, weil eine vorhandene Ausgabeeinrichtung für eine Ausgabe komplexerer Information, wie etwa einen QR-Code, nicht ausgebildet ist, oder sei es, weil die Ausgabeeinrichtung durch fortwährenden Einsatz in abrasiver Umgebung ihre ursprüngliche Eignung zur Ausgabe komplexerer Information eingebüßt hat.

Diese Aufgabe wird gemäß einem Verfahrensaspekt der vorliegenden Erfindung gelöst durch ein Verfahren mit allen Merkmalen des Anspruchs 1.

Die Gesteinsveränderungsvorrichtung, welche an der Ausführung des Verfahrens beteiligt ist, umfasst einen vorrichtungsbasierten Teil der Steuereinrichtung. Dabei bezieht sich der Begriff "vorrichtungsbasiert" auf die Gesteinsveränderungsvorrichtung, welche nachfolgend auch nur kurz als "Vorrichtung" bezeichnet ist. Ebenso zeigt die Voranstellung des Ausdrucks "Vorrichtungs-" vor ein Nomen in der vorliegenden Anmeldung eine Zugehörigkeit zur Gesteinsveränderungsvorrichtung.

Der vorrichtungsbasierte Teil der Steuereinrichtung ist bevorzugt eine bordeigene Steuereinrichtung, welche dauerhaft mittelbar oder unmittelbar mit einem Maschinenrahmen der Gesteinsveränderungsvorrichtung verbunden ist, wie es etwa an einem Bedienpult für einen Maschinenführer der Gesteinsveränderungsvorrichtung der Fall ist. Ganz grundsätzlich kann der vorrichtungsbasierte Teil der Steuereinrichtung jede Steuereinrichtung sein, welche bereits zur Steuerung des Betriebs der Gesteinsveränderungsvorrichtung mit dieser derart gekoppelt ist, dass Steuersignale vom vorrichtungsbasierten Teil der Steuereinrichtung an wenigstens eine Einrichtung, wie etwa eine Datenausgabeeinrichtung, insbesondere eine Anzeigeeinrichtung, oder/und an wenigstens einen Aktuator und gegebenenfalls an wenigstens einen Sensor der Vorrichtung übertragbar sind und im Falle einer Übertragung dort eine Aktion bewirken können. Besonders bevorzugt ist der vorrichtungsbasierte Teil der Steuereinrichtung auch zum Empfang von Signalen von wenigstens einem Aktuator oder/und wenigstens einem Sensor der Gesteinsveränderungsvorrichtung verbunden, sodass der vorrichtungsbasierte Teil der Steuereinrichtung Signale von wenigstens einem Aktuator oder/und wenigstens einem Sensor ausgeben oder/und bei der Erzeugung künftiger Steuersignale berücksichtigen kann.

Wenigstens der vorrichtungsbasierte Teil der Steuereinrichtung umfasst eine mit der Gesteinsveränderungsvorrichtung gekoppelte Vorrichtungs-Datenverarbeitungseinrichtung, eine mit der Vorrichtungs-Datenverarbeitungseinrichtung datenübertragend verbundene Vorrichtungs-Datenausgabeeinrichtung und eine mit der Vorrichtungs-Datenverarbeitungseinrichtung datenübertragend verbundene Vorrichtungs-Sende- und Empfangseinrichtung zur drahtlosen Übertragung von Daten. Die Vorrichtungs-Datenverarbeitungseinrichtung umfasst bevorzugt einen oder mehrere integrierte Schaltkreise und wenigstens einen Datenspeicher, in welchem ein Betriebsprogramm der Vorrichtungs-Datenverarbeitungseinrichtung durch die Vorrichtungs-Datenverarbeitungseinrichtung ausführbar abgelegt sein kann und in welchem Daten durch die Vorrichtungs-Datenverarbeitungseinrichtung abrufbar gespeichert werden können.

Die Vorrichtungs-Datenausgabeeinrichtung ist zur human wahrnehmbaren Ausgabe von Daten ausgebildet. Dadurch wird erreicht, dass eine Datenausgabe durch eine Bedienperson wahrgenommen werden kann. Dies hilft, den Bereich der Wahrnehmbarkeit ausgegebener Daten zu begrenzen, etwa im Gegensatz zu ungerichtet abgestrahlten Radiowellen. Außerdem können human wahrnehmbare Daten mitunter nur erschwert von unbefugten Dritten abgefangen oder aufgeklärt werden, da die bevorzugt nur human wahrnehmbar ausgegebenen Daten eine für Unbefugte nur schwer oder nicht erreichbare Annäherung an die Vorrichtungs-Datenausgabeeinrichtung erfordern, um die Daten wahrnehmen zu können, und da die bevorzugt nur human wahrnehmbar ausgegebenen Daten für Maschinen nur unter erschwerten Bedingungen von diesen vollständig erfasst werden können.

Die Vorrichtungs-Sende- und Empfangseinheit dient der drahtlosen Kommunikation mit anderen Sende- und Empfangsgeräten, wie etwa jener der nachfolgend näher beschriebenen Fernbedienung. Die drahtlose Kommunikation kann auf Grundlage von unterschiedlichen Standards erfolgen, wie etwa WLAN, einem Mobilfunk-Standard, NFC, RFID oder Bluetooth^{®}.

Selbstverständlich kann der vorrichtungsbasierte Teil der Steuereinrichtung auch eine Vorrichtungs-Dateneingabeeinrichtung aufweisen, um Daten in die Steuereinrichtung einzugeben. Auf diese vorteilhafte Weiterbildung kommt es im Grundgedanken der vorliegenden Erfindung jedoch zunächst nicht an.

So wie der Präfix "Vorrichtungs-" eine Referenz oder eine Zugehörigkeit zur Gesteinsveränderungsvorrichtungen anzeigt, zeigt der Präfix "Fern-" in der vorliegenden Anmeldung eine Referenz oder eine Zugehörigkeit zur Fernbedienung an. Die an der Ausführung des nachfolgend diskutierten Verfahrens beteiligte drahtlose Fernbedienung umfasst eine Fern-Datenverarbeitungseinrichtung, eine mit der Fern-Datenverarbeitungseinrichtung datenübertragend gekoppelte Fern-Dateneingabeeinrichtung zur Eingabe von Daten durch eine Bedienperson und eine mit der Fern-Datenverarbeitungseinrichtung datenübertragend gekoppelte Fern-Sende- und Empfangseinrichtung zur drahtlosen Übertragung von Daten. Auch die Fern-Datenverarbeitungseinrichtung umfasst bevorzugt wenigstens einen integrierten Schaltkreis und einen Datenspeicher. Für den Datenspeicher der Fern-Datenverarbeitungseinrichtung und seine Eigenschaften sowie Inhalte gilt das oben zur Vorrichtungs-Datenverarbeitungseinrichtung Gesagte mutatis mutandis entsprechend.

Das Verfahren umfasst zunächst den folgenden Schritt:
i. Veranlassen der Vorrichtungs-Datenverarbeitungseinrichtung, eine erste Authentifizierungsinformation mit niedrigerem Sicherheitsniveau zu erzeugen. Dabei weist die erste Authentifizierungsinformation ein niedrigeres Sicherheitsniveau auf als die weiter unten diskutierte zweite Authentifizierungsinformation.

Gemäß dem Grundgedanken der vorliegenden Anmeldung ist das Sicherheitsniveau einer Authentifizierungsinformation bestimmt durch die Anzahl möglicher Kombinationen von die Authentifizierungsinformation bildenden Elementen. Diese Kombinationsanzahl entspricht einer Anzahl an Versuchen, welche maximal notwendig sind, um durch einen Brute-Force-Angriff, bei welchem schlicht jede mögliche Elementkombination ausprobiert wird, unerlaubt, aber erfolgreich ein Authentifizierungserfordernis zu überwinden.

Die erste Authentifizierungsinformation ist dabei bevorzugt gebildet durch einen kleineren Zeichensatz oder/und durch eine geringere Anzahl an Zeichen aus dem Zeichensatz als die weiter unten diskutierte zweite Authentifizierungsinformation. Die erste Authentifizierungsinformation ist damit weniger sicher als die zweite Authentifizierungsformation, wird jedoch verglichen mit der sichereren zweiten Authentifizierungsinformation auch nur über einen kürzeren, insbesondere deutlich kürzeren, Zeitraum benötigt.

Die erste Authentifizierungsinformation kann daher selbst mit sehr einfachen oder stark beeinträchtigten Vorrichtungs-Datenausgabeeinrichtungen sicher human wahrnehmbar ausgegeben werden.

Bevorzugt ist die erste Authentifizierungsinformation nur durch Ziffern gebildet, sodass ihr Zeichensatz maximal zehn verschiedene Elemente umfasst. Zusätzlich oder alternativ kann die erste Authentifizierungsinformation 8 bis 40, vorzugsweise 10 bis 28, besonders bevorzugt 24 Stellen aufweisen.

Ist die erste Authentifizierungsinformation erzeugt, kann der nächste Verfahrensschritt folgen:
ii. Human wahrnehmbare Ausgabe der ersten Authentifizierungsinformation an der Vorrichtungs-Datenausgabeeinrichtung.

"Human wahrnehmbar" bedeutet: mit wenigstens einem menschlichen Sinn wahrnehmbar. Beispielsweise kann die erste Authentifizierungsinformation akustisch ausgegeben werden, was jedoch weniger stark bevorzugt ist. Denn akustische Ausgaben sind in gewisser Weise ungerichtet und können möglicherweise noch an Orten wahrgenommen werden, an denen ihre Wahrnehmung nicht erwünscht ist. Dieses Risiko kann durch entsprechende Wahl der Lautstärke der Ausgabe gemindert werden. Allerdings ist zu berücksichtigen, dass die Vorrichtung und die Fernbedienung sich in der Regel auf eingerichteten Baustellen befinden, an denen ein Geräuschpegel herrscht, welcher eine zu starke Verringerung des Lautstärkepegels der Ausgabe der ersten Authentifizierungsinformation verhindert.

Bevorzugt wird die erste Authentifizierungsinformation optisch auf einem Bildschirm oder Monitor dargestellt. Die Betriebsumgebung der Vorrichtung verhindert dabei nicht eine sichere optische Wahrnehmung auch von Zeichen geringer Größe, wie sie auf Anzeigen früherer Mobiltelefone verwendet wurden. Derartige Darstellungen sind bei ausreichender Annäherung an die Vorrichtungs-Datenausgabeeinrichtung sehr gut wahrnehmbar und sind bereits aus geringfügig erhöhter Entfernung, also beispielsweise aus mehr als 2 m Entfernung von der Vorrichtungs-Datenausgabeeinrichtung für einen Menschen nicht mehr ohne Hilfsmittel erkennbar. Für die Ausgabe einer nur aus Ziffern oder einem ähnlich beschränkten Zeichensatz bestehenden ersten Authentifizierungsinformation ist ein sehr einfacher monochromer Monitor ausreichend, was die Robustheit der Vorrichtungs-Datenausgabeeinrichtung vorteilhaft erhöht und ihre Herstellungskosten vorteilhaft verringert. Außerdem können optische Ausgaben im Gegensatz zu akustischen nur in definierte Richtungen oder Richtungsbereiche ausgegeben werden.

Wurde die erste Authentifizierungsinformation human wahrnehmbar ausgegeben, wobei die die erste Authentifizierungsinformation wahrnehmende Bedienperson die vollständige und richtige Wahrnehmung durch Signaleingabe, beispielsweise durch Betätigen einer Schalteinrichtung, wie etwa Schaltfläche oder Schaltknopf, quittieren kann, kann der nächste Verfahrensschritt folgen:
iii. Eingeben der ersten Authentifizierungsinformation in die Fern-Dateneingabeeinrichtung durch die Bedienperson.

Der Einsatz einer Bedienperson als Mittelsmann der Informationsübertragung ist vorliegend ein Sicherheitsmerkmal, dass das Abgreifen der ersten Authentifizierungsinformation durch eine spionierende Maschine erschwert.

Nach Eingabe der ersten Authentifizierungsinformation in die Fern-Dateneingabeeinrichtung verfügen die Fernbedienung und der vorrichtungsbasierte Teil der Steuereinrichtung über eine übereinstimmende, ausreichend geheime Information, sodass sich die Fernbedienung gegenüber dem vorrichtungsbasierten Teil der Steuereinrichtung als Gerät mit erhöhten Vertrauensniveau authentifizieren kann. Zu diesem Zweck kann der nachfolgende Verfahrensschritt ausgeführt werden:
iv. Aufbau einer drahtlosen Kommunikation mit dem vorrichtungsbasierten Teil der Steuereinrichtung durch die Fernbedienung auf Grundlage der ersten Authentifizierungsinformation.

Über ihre jeweiligen Sende- und Empfangseinrichtungen können die Fernbedienung und der vorrichtungsbasierte Teil der Steuereinrichtung eine drahtlose Kommunikation beginnen, in deren Verlauf der vorrichtungsbasierte Teil der Steuereinrichtung die von der Fern-Sende- und Empfangseinrichtung an den vorrichtungsbasierten Teil der Steuereinrichtung übertragene erste Authentifizierungsinformation auf Richtigkeit und Vollständigkeit überprüft und im Falle einer erfolgreichen Überprüfung die aufgebaute drahtlose Kommunikation weiter betreibt. Im Falle einer erfolglosen Überprüfung wird die begonnene drahtlose Kommunikation, gewünschtenfalls unter Ausgabe einer Fehlermeldung, umgehend beendet.

Nach dem erfolgreichen Aufbau der Kommunikation mit dem vorrichtungsbasierten Teil der Steuereinrichtung gilt die Fernbedienung an der Gesteinsveränderungsvorrichtung als auf Grundlage der ersten Authentifizierungsinformation authentifiziert.

Eine derartige Überprüfung umfasst auch eine Verwendung der ersten Authentifizierungsinformation als Krypto-Schlüssel zur Verschlüsselung von Information, welche die Fernbedienung an den vorrichtungsbasierten Teil überträgt und von diesem mit einem weiteren Schlüssel entschlüsselt werden kann, wie dies aus der Technik asynchroner Verschlüsselungen bekannt ist. Ebenso ist es eine Überprüfung im Sinne der vorliegenden Erfindung, wenn die erste Authentifizierungsinformation als Grundlage einer Modulation des von der Fernbedienung zum vorrichtungsbasierten Teil der Steuereinrichtung abgestrahlten Sendesignals dient und die Vorrichtungs-Sende- und Empfangseinrichtung ausschließlich zum Empfang eines entsprechend modulierten Sendesignals bereit ist.

Zur Erhöhung der Kommunikationssicherheit wird der folgende Verfahrensschritt nach Herstellung der drahtlosen Kommunikation zwischen Fernbedienung und vorrichtungsbasiertem Teil der Steuereinrichtung ausgeführt:
v. Erzeugen einer zweiten Authentifizierungsinformation mit höherem Sicherheitsniveau durch die Vorrichtungs-Datenverarbeitungseinrichtung.

Gemäß obigen Ausführungen umfasst die zweite Authentifizierungsinformation wenigstens einen größeren Zeichensatz oder/und eine größere Anzahl an Zeichen als die erste Authentifizierungsinformation. Es seien m die Anzahl an auswählbaren Elementen in einem Satz von Elementen und n die zur Bildung einer Authentifizierungsinformation tatsächlich verwendete Elementanzahl. Dann bestehen mⁿ Möglichkeiten, die Authentifizierungsinformation aus dem Satz von m Elementen zu bilden. Für n>>m gilt, dass die Inkrementierung von m um 1 die Anzahl möglicher Kombinationen stärker erhöht als die Inkrementierung von n um 1. Für m>>n gilt, dass die Inkrementierung von n um 1 die Anzahl möglicher Kombinationen stärker erhöht als die Inkrementierung von m um 1.

Da die Fernbedienung auf Grundlage der Verwendung der ersten Authentifizierungsinformation für den vorrichtungsbasierten Teil der Steuereinrichtung ein vorübergehend vertrauenswürdiges Gerät ist, kann der vorrichtungsbasierte Teil der Steuerung die zweite Authentifizierungsinformation an die Fernbedienung über die aufgebaute drahtlose Kommunikation übertragen. Dies ist der nächste Verfahrensschritt:
vi. Drahtloses Übertragen der zweiten Authentifizierungsinformation an die Fernbedienung.

Nun verfügt die Fernbedienung mit der zweiten Authentifizierungsinformation über eine stärkere Authentifizierungsinformation, welche für Dritte ungleich schwieriger zu erraten oder zu "hacken" ist als die erste Authentifizierungsinformation. Die zweite Authentifizierungsinformation kann von der Fernbedienung in unterschiedlicher Art und Weise verwendet werden.

So kann das Verfahren zur Erhöhung der Kommunikationssicherheit nach Ausführung des Schritts vi. folgende weitere Schritte umfassen:
vii. Etablieren einer drahtlosen Kommunikation zwischen der Fernbedienung und dem vorrichtungsbasierten Teil der Steuereinrichtung auf Grundlage der zweiten Authentifizierungsinformation,
viii. Deaktivieren der ersten Authentifizierungsinformation.

Dabei ist die Reihenfolge der Ausführung der Schritte vii. und viii. nicht durch die römische Schrittnummer der Schritte vorgegeben. Es kann die erste Authentifizierungsinformation vor der zweiten Authentifizierungsinformation deaktiviert werden.

Die Deaktivierung der ersten Authentifizierungsinformation bedeutet, dass auf Grundlage der ersten Authentifizierungsinformation keine drahtlose Kommunikation zwischen einer Fernbedienung oder sonst eines beliebigen Geräts oder Vorrichtung und dem vorrichtungsbasierten Teil der Steuereinrichtung aufgebaut oder aufrechterhalten werden kann. Hierzu bedarf es nach der Deaktivierung der ersten Authentifizierungsinformation einer erneuten Ausführung des Schrittes i.

Auf Grundlage der zweiten Authentifizierungsinformation kann erneut eine drahtlose Kommunikation zwischen der Fernbedienung und dem vorrichtungsbasierten Teil der Steuereinrichtung etabliert werden.

Nach dem erfolgreichen Etablieren der Kommunikation mit dem vorrichtungsbasierten Teil der Steuereinrichtung gilt die Fernbedienung an der Gesteinsveränderungsvorrichtung als auf Grundlage der zweiten Authentifizierungsinformation authentifiziert.

Grundsätzlich kann eine Erzeugung einer ersten Authentifizierungsinformation gemäß obigem Schritt i. durch Betätigung einer entsprechenden Schalteinrichtung, wie etwa einer Schaltfläche oder/und eines Schalters oder/und einer Taste, am vorrichtungsbasierten Teil der Steuereinrichtung veranlasst werden. Hierzu ist erforderlich, dass eine Bedienperson Zutritt zum vorrichtungsbasierten Teil der Steuereinrichtung hat und Kenntnis hat, welche Betätigung oder Betätigungen eine Erzeugung einer ersten Authentifizierungsinformation veranlassen. Alternativ oder zusätzlich kann die Veranlassung einer Erzeugung der ersten Authentifizierungsinformation eine Prüfung einer Kompatibilität eines bedienpersonseitigen Authentifizierungsgeheimnisses mit einem vorrichtungsseitigen Authentifizierungsgeheimnis umfassen.

Beispielsweise kann ein bedienpersonseitiges Authentifizierungsgeheimnis ein Schlüssel oder ein elektronischer Datenspeicher sein und kann das vorrichtungsseitige Authentifizierungsgeheimnis ein Schließzylinder mit dem Schlüssel entsprechenden Stiftzuhaltungen oder ein Lesegerät und ein vorrichtungsseitiger Datenspeicher sein.

Bei der Kombination von Schlüssel und Schließzylinder ist die Kompatibilitätsprüfung eine Prüfung einer Beweglichkeit des Zylinderkerns im Zylindergehäuse, sodass durch Rotation des Zylinderkerns im Zylindergehäuse ein eine erfolgreiche Kompatibilitätsprüfung anzeigender Schalter betätigt werden kann.

Bei einer Kombination von Datenspeicher und Lesegerät/Prüfroutine kann die Kompatibilitätsprüfung ein Vergleich von gelesenen und im vorrichtungsseitigen Datenspeicher gespeicherten Daten oder/und eine Rechenoperation auf Grundlage von gelesenen und vorrichtungsseitig gespeicherten Daten umfassen oder sein.

Wenngleich der Schritt v. automatisch nach Aufbau der drahtlosen Kommunikation auf Grundlage der ersten Authentifizierungsinformation erfolgen kann, ist es für die Sicherheit der Kommunikation vorteilhafter, wenn das Verfahren zwischen dem Schritt iv. und dem Schritt v. einen Schritt einer Übertragung eines Anforderungssignals von der Fernbedienung an den vorrichtungsbasierten Teil der Steuereinrichtung umfasst, wobei das Erzeugen einer zweiten Authentifizierungsinformation mit höherem Sicherheitsniveau durch die Vorrichtungs-Datenverarbeitungseinrichtung in Schritt v. nur nach Eingang des Anforderungssignals bei der Vorrichtungs-Datenverarbeitungseinrichtung ausgeführt wird. So kann sichergestellt werden, dass die zweite Authentifizierungsinformation erst dann erzeugt wird, wenn die Fernbedienung oder/und die Bedienperson hierfür bereit ist bzw. sind. Das Anforderungssignal kann von der Fernbedienung automatisiert oder von der Bedienperson durch entsprechende Betätigung wenigstens eines Betätigungsmittels, wie beispielsweise Schaltfläche oder/und Schaltknopf oder/und Taste, erzeugt werden. Ebenso kann die Übertragung des erzeugten Anforderungssignals automatisiert durch die Fernbedienung oder durch entsprechende Betätigung wenigstens eines Betätigungsmittels durch die Bedienperson bewirkt werden.

Die Vorrichtungs-Datenverarbeitungseinrichtung kann dazu ausgebildet sein, die erste Authentifizierungsinformation nach Ablauf einer vorbestimmten Zeitspanne ab Veranlassung ihrer Erzeugung oder ab ihrer human wahrnehmbaren Ausgabe wieder zu löschen. Die vorbestimmte Zeitspanne beträgt vorzugsweise nicht mehr als 5 Minuten, was problemlos ausreicht, um eine 8- bis 40-stellige numerische Zeichenkette in die Fernbedienung einzugeben. Lediglich als Beispiel sei demonstriert, dass eine aus den Ziffern 0 bis 9 gebildete zwölfstellige Zeichenkette als die erste Authentifizierungsinformation 10¹² kombinatorische Möglichkeiten bildet, die erste Authentifizierungsinformation zu bilden. Unter der Annahme, dass ein in der Nähe eines Einsatzortes einer Gesteinsveränderungsvorrichtung verfügbarer mobiler Computer 200 Millionen Zeichenketten pro Sekunde ausprobieren kann, würde er 5000 Sekunden, also etwa 1 Stunde und 23 Minuten benötigen, um alle verfügbaren Kombinationen zu testen. In nicht mehr als 5 Minuten kann ein Brute-Force-Angriff nur weniger als ein Promille der möglichen Kombinationen testen. Entsprechend gering ist die Erfolgswahrscheinlichkeit eines solchen Angriffs.

Häufig ist es erwünscht, nicht nur eine, sondern mehrere drahtlose Fernbedienungen mit einer Gesteinsveränderungsvorrichtung als temporärer Teil ihrer Steuereinrichtung zu verbinden. Ein aus Sicht der Systemsicherheit vorteilhafter Ansatz ist dabei, nicht das oben beschriebene Verfahren ausgehend von Schritt i. für eine mit der Gesteinsveränderungsvorrichtung zu koppelnde weitere drahtlose Fernbedienung auszuführen und erneut eine weniger sichere erste Authentifizierungsinformation zu verwenden. Stattdessen ist es bevorzugt, dass die Fernbedienung eine mit der Fern-Datenverarbeitungseinrichtung datenübertragend gekoppelte Fern-Datenausgabeeinrichtung zur Ausgabe von Daten umfasst, wobei das Verfahren die folgenden weiteren Schritte umfasst:
a. Ausgeben der zweiten Authentifizierungsinformation mittels der Fern-Datenausgabeeinrichtung der Fernbedienung,
b. Einlesen der zweiten Authentifizierungsinformation mittels einer weiteren Fern-Datenaufnahmeeinrichtung einer weiteren drahtlosen Fernbedienung, wobei die weitere drahtlose Fernbedienung eine weitere Fern-Datenverarbeitungseinrichtung, die mit der weiteren Fern-Datenverarbeitungseinrichtung datenübertragend gekoppelte weitere Fern-Datenaufnahmeeinrichtung zur Aufnahme von Daten und eine mit der weiteren Fern-Datenverarbeitungseinrichtung datenübertragend gekoppelte weitere Fern-Sende- und Empfangseinrichtung zur drahtlosen Übertragung von Daten umfasst, und
c. Etablieren einer drahtlosen Kommunikation zwischen der weiteren Fernbedienung und dem vorrichtungsbasierten Teil der Steuereinrichtung auf Grundlage der zweiten Authentifizierungsinformation.

Die Fernbedienung und die weitere Fernbedienung können beliebige Fernbedienungen sein. Insbesondere kann wenigstens eine Fernbedienung aus Fernbedienung und weiterer Fernbedienung ein Smartphone oder ein Tablet-Computer sein. Smartphones und Tablets verfügen über hochwertige Monitore mit hoher Auflösung und klarer Bildwiedergabe als bevorzugte Fern-Datenausgabeeinrichtung. Außerdem verfügen diese Geräte über hochwertige Kameras als die Fern-Datenaufnahmeeinrichtung mit ebenfalls ausreichend hoher Auflösung, um eine vom Monitor einer Fernbedienung ausgegebene zweite Authentifizierungsinformation einzulesen. Die Fern-Datenaufnahmeeinrichtung kann Teil der Fern-Dateneingabevorrichtung sein oder kann die Fern-Dateneingabevorrichtung sein.

Wiederum ist die optische Ausgabe der zweiten Authentifizierungsinformation und das optische Einlesen derselben aus den oben genannten Gründen eine bevorzugte Methode. Grundsätzlich kann die zweite Authentifizierungsinformation jedoch auch akustisch ausgegeben und "eingelesen" werden. Auch eine Übertragung mit elektromagnetischen Wellen, etwa im NFC- oder RFID- oder Bluetooth^{®}-Standard, ist als Ausgabe und Einlesen denkbar.

Zur Vermeidung eines unerwünschten Abhörens oder Aufklärens der zweiten Authentifizierungsinformation kann gemäß einer Weiterbildung der vorliegenden Erfindung vorgesehen sein, dass die Fern-Datenausgabeeinrichtung der Fernbedienung die zweite Authentifizierungsinformation in nur einen beschränkten Raumbereich hinein ausgibt, so dass sie nur von der Fern-Datenaufnahmeeinrichtung eingelesen werden kann, wenn diese sich in dem beschränkten Raumbereich befindet. Dies ist beispielsweise der Fall, wenn die Fern-Datenausgabeeinrichtung die zweite Authentifizierungsinformation auf einem Monitor darstellt. Der Monitor hat eine Darstellungsseite und eine Rückseite und ist nur auf der Darstellungsseite einsehbar. Üblicherweise ist der Monitor bezogen auf einen Normalenvektor auf die Darstellungsfläche des Monitors nur innerhalb eines durch die Bauart des Monitors bestimmten Sichtkegels mit dem Normalenvektor als Kegelachse lesbar. Zusätzlich oder alternativ kann die Fern-Datenverarbeitungseinrichtung eine Darstellungsgröße auf dem Monitor wählen, welche nur bis zu einer gewissen Entfernung, beispielsweise bis zu einer Entfernung von 1 m oder von 2 m, zu maschinenlesbaren Ergebnissen führt. Die Fern-Datenausgabeeinrichtung gibt bevorzugt die zweite Authentifizierungsinformation codiert aus, beispielsweise als QR-Code. Die Verwendung von QR-Code erlaubt nicht nur eine komprimierte Darstellung der zweiten Authentifizierungsinformation, sondern gestattet, die Reichweite der dargestellten zweiten Authentifizierungsinformation weiter zu verringern, da Details von QR-Codes an Monitoren, wie sie beispielsweise Smartphones oder Tablets besitzen, bereits aus einem halben Meter oder 1 m Entfernung nur noch mit großen Schwierigkeiten eindeutig erkennbar sind.

Vorzugsweise wird die zweite Authentifizierungsinformation an der Fernbedienung in einem Fern-Datenspeicher gespeichert Die zweite Authentifizierungsinformation bleibt bevorzugt bis auf Widerruf oder gewünschtenfalls bis zum Ablauf einer vorbestimmten oder bestimmbaren Zeitspanne aktiv, so dass eine bereits durch die zweite Authentifizierungsinformation authentifizierte Fernbedienung nach Beendigung ihrer Kommunikationsverbindung mit dem vorrichtungsbasierten Teil der Steuereinrichtung sich unmittelbar erneut mit der zweiten Authentifizierungsinformation am vorrichtungsbasierten Teil der Steuereinrichtung authentifizieren kann. Eine Beendigung der Kommunikationsverbindung kann beispielsweise durch Ausschalten der Fernbedienung, durch Ausschalten des vorrichtungsbasierten Teils der Steuereinrichtung oder durch Bewegen der Fernbedienung aus der Übertragungsreichweite von Fern-Sende- und Empfangseinrichtung und Vorrichtungs-Sende- und Empfangseinrichtung bewirkt sein.

Neben der Kopplung von zwei Fernbedienungen mit einer Gesteinsveränderungsvorrichtung ist die Kopplung einer Fernbedienung mit zwei oder mehr Gesteinsveränderungsvorrichtungen von Interesse. Denn häufig arbeiten zwei oder mehr Gesteinsveränderungsvorrichtungen an ihrem Einsatzort miteinander verkettet, etwa indem eine Gesteinsveränderungsvorrichtung als zu veränderndes Material ein verändertes Material einer anderen Gesteinsveränderungsvorrichtung übernimmt. Für die nachfolgende Beschreibung wird die vorstehend beschriebene Gesteinsveränderungsvorrichtung als "erste Gesteinsveränderungsvorrichtung" bezeichnet.

Sofern die weitere Gesteinsveränderungsvorrichtung über einen ausreichend leistungsstarken Monitor verfügt, kann die Kopplung der Fernbedienung mit der weiteren Gesteinsveränderungsvorrichtung in gewohnter Weise durch Ausgabe einer Authentifizierungsinformation auf dem Monitor, etwa als QR-Code, und durch automatisiertes Einlesen der Authentifizierungsinformation mit einer entsprechenden Leseeinrichtung der Fernbedienung, wie etwa der Fern-Datenaufnahmeeinrichtung, auf Grundlage der so ausgetauschten Authentifizierungsinformation bewirkt werden.

Steht ein solcher Monitor nicht zur Verfügung oder soll der im vorstehenden Absatz beschriebene Austausch von Authentifizierungsinformation aus irgendeinem Grund nicht durchgeführt werden, können zum Zwecke einer Kopplung einer Fernbedienung mit mehr als einer Gesteinsveränderungsvorrichtung, z. B. einer Kopplung einer an der vorstehend genannten ersten Gesteinsveränderungsvorrichtung auf Grundlage wenigstens der ersten Authentifizierungsinformation, d. h. auf Grundlage der ersten oder der zweiten Authentifizierungsinformation, authentifizierten Fernbedienung und einer weitere Gesteinsveränderungsvorrichtung, die Schritte i. bis vi. zur Authentifizierung der Fernbedienung als temporärer Teil einer weiteren Steuereinrichtung der weiteren Gesteinsveränderungsvorrichtung ausgeführt werden. Bevorzugt kann die Fernbedienung mit der ersten Gesteinsveränderungsvorrichtung drahtlos bereits auf Grundlage der zweiten Authentifizierungsinformation kommunizieren oder kommuniziert bereits mit dieser.

Gemäß einer technischen Alternative der vorliegenden Erfindung kann eine Fernbedienung dazu ausgebildet sein, gleichzeitig nur mit einer Gesteinsveränderungsvorrichtung bzw. deren vorrichtungsbasierter Steuereinrichtung in drahtloser Kommunikationsverbindung stehen zu können. In diesem Falle kann die Fernbedienung nach Authentifizierung an der vorrichtungsbasierten Steuereinrichtung der ersten Gesteinsveränderungsvorrichtung wenigstens durch die erste Authentifizierungsinformation, vorzugsweise jedoch durch die zweite Authentifizierungsinformation, die mit dem vorrichtungsbasierten Teil der Steuereinrichtung der ersten Gesteinsveränderungsvorrichtung aufgebaute oder etablierte drahtlose Kommunikation beenden, um eine weitere drahtlose Kommunikation mit der weiteren Gesteinsveränderungsvorrichtung aufzubauen und zu etablieren.

Ist die Fernbedienung zur Herstellung einer gleichzeitigen drahtlosen Kommunikationsverbindung mit mehr als einer Gesteinsveränderungsvorrichtung bzw. deren vorrichtungsbasierten Steuereinrichtungen ausgebildet, kann eine drahtlose Kommunikation mit der weiteren Gesteinsveränderungsvorrichtung aufgebaut bzw. etabliert werden, während eine drahtlose Kommunikationsverbindung mit der ersten Gesteinsveränderungsvorrichtung besteht. An der Fernbedienung kann dann zwischen den gekoppelten Gesteinsveränderungsvorrichtungen gewechselt werden, um eine drahtlose Kommunikationsverbindung als aktive drahtlose Kommunikationsverbindung für eine Signalübertragung auszuwählen, während die übrigen drahtlosen Kommunikationsverbindungen auf Stand-By gesetzt oder im Hintergrund ausgeführt werden.

Wie die vorgenannte erste Gesteinsveränderungsvorrichtung umfasst die weitere Gesteinsveränderungsvorrichtung als vorrichtungsbasierter Teil ihrer weiteren Steuereinrichtung wenigstens eine mit der weiteren Gesteinsveränderungsvorrichtung gekoppelte weitere Vorrichtungs-Datenverarbeitungseinrichtung, eine mit der weiteren Vorrichtungs-Datenverarbeitungseinrichtung datenübertragend verbundene weitere Vorrichtungs-Datenausgabeeinrichtung zur human wahrnehmbaren Ausgabe von Daten und eine mit der weiteren Vorrichtungs-Datenverarbeitungseinrichtung datenübertragend verbundene weitere Vorrichtungs-Sende- und Empfangseinrichtung zur drahtlosen Übertragung von Daten. Das zuvor zur Gesteinsveränderungsvorrichtung und ihrem Aufbau Gesagte gilt mutatis mutandis auch für die vorliegend diskutierte weitere Gesteinsveränderungsvorrichtung. In den Schritten i. bis vi. tritt an die Stelle einer Einrichtung des vorrichtungsbasierten Teils der Steuereinrichtung die entsprechende weitere Einrichtung des vorrichtungsbasierten Teils der weiteren Steuereinrichtung. Somit kann nach und nach schrittweise ein und dieselbe Fernbedienung mit zwei oder mehr Gesteinsveränderungsvorrichtungen gekoppelt und eine drahtlose Kommunikation zwischen der Fernbedienung und jeder der Gesteinsveränderungsvorrichtungen aufgebaut werden. Gemäß den obigen Ausführungen können die mehreren drahtlosen Kommunikationsverbindungen sequentiell oder simultan bestehen.

Aus den oben bereits erläuterten Gründen erhöhter Kommunikationssicherheit ist es vorteilhaft, wenn die Fernbedienung und der vorrichtungsbasierte Teil der weiteren Steuereinrichtung die Schritte vii. und viii. mit der Maßgabe ausführen, dass an die Stelle des vorrichtungsbasierten Teils der Steuereinrichtung der vorrichtungsbasierte Teil der weiteren Steuereinrichtung tritt. So kann eine drahtlose Kommunikation zwischen der Fernbedienung und jeder der Gesteinsveränderungsvorrichtungen, gegenüber welcher die Fernbedienung authentifiziert wird, sequentiell oder simultan etabliert werden. Die erste Authentifizierungsinformation mit ihrer geringeren Sicherheit wird dabei stets nur in einer Anfangsphase eines erstmaligen Kommunikationsaufbaus benötigt.

Ist eine Fernbedienung gegenüber wenigstens zwei Gesteinsveränderungsvorrichtungen authentifiziert, kann gemäß einer vorteilhaften Weiterbildung aus den wenigstens zwei mit ein und derselben Fernbedienung sequentiell oder simultan kommunizierenden Gesteinsveränderungsvorrichtungen steuerungstechnisch ein Anlagenzug gebildet werden. Das Verfahren umfasst daher bevorzugt den Schritt einer Bildung eines Anlagenzugs aus den mit der Fernbedienung auf Grundlage der jeweiligen zweiten Authentifizierungsinformationen sequentiell oder simultan drahtlos kommunizierenden Vorrichtungen: der Gesteinsveränderungsvorrichtung und der weiteren Gesteinsveränderungsvorrichtung.

Der Anlagenzug kann auch dadurch gebildet werden, dass durch sequentielles oder simultanes Koppeln einer Fernbedienung mit den zur Bildung des Anlagenzugs ausgewählten Gesteinsveränderungsvorrichtungen die Gesteinsveränderungsvorrichtungen mittels der Fernbedienung untereinander zur Signalübertragung gekoppelt werden und die Fernbedienung nur mit einer Gesteinsveränderungsvorrichtung der zu einem Anlagenzug verbundenen Gesteinsveränderungsvorrichtungen unmittelbar zur drahtlosen Kommunikation verbunden ist. Der so gebildete Anlagenzug bildet eine Art Master-Slave-System, in welchem die unmittelbar mit der Fernbedienung gekoppelte Gesteinsveränderungsvorrichtung die Mastervorrichtung bildet und die wenigstens eine über die Mastervorrichtung mittelbar mit der Fernbedienung gekoppelte Gesteinsveränderungsvorrichtung eine Slavevorrichtung.

Um ein Kompromittieren der drahtlosen Kommunikation zu verhindern, umfasst das Verfahren bevorzugt den Schritt einer Trennung der zwischen der Fernbedienung und der Gesteinsveränderungsvorrichtung bestehenden drahtlosen Kommunikation auf Eintritt eines vorbestimmten Auflösungsereignisses hin. Das Auflösungsereignis kann entsprechend vordefiniert sein, etwa wenn die zuvor authentifizierte Fernbedienung oder eine der zuvor authentifizierten Fernbedienungen den drahtlosen Kommunikationskontakt mit der Gesteinsveränderungsvorrichtung oder mit einer der Gesteinsveränderungsvorrichtungen verliert.

Bevorzugt soll nicht nur die drahtlose Kommunikation zwischen Fernbedienung und der mit der Fernbedienung drahtlos kommunizierenden Gesteinsveränderungsvorrichtung beendet, sondern auch die erfolgte Authentifizierung auf Grundlage der zweiten Authentifizierungsinformation gelöscht bzw. deaktiviert werden, wenn an der mit der Fernbedienung kommunizierenden Gesteinsveränderungsvorrichtung die Erzeugung einer ersten Authentifizierungsinformation veranlasst wird. Im Falle eines gebildeten Anlagenzugs gilt dies bevorzugt, wenn an einer der Gesteinsveränderungsvorrichtungen des Anlagenzugs die Erzeugung einer ersten Authentifizierungsinformation veranlasst wird. Das Veranlassen einer Erzeugung einer ersten Authentifizierungsinformation ist ein Indiz dafür, dass eine neue Authentifizierung einer Fernbedienung an dem vorrichtungsbasierten Teil der Steuereinrichtung der Gesteinsveränderungsvorrichtung durchgeführt werden soll. Unter der grundlegenden Vermutung, dass eine solche Anforderung einer ersten Authentifizierungsinformation nicht grundlos geschieht, werden bestehende drahtlose Kommunikationen zwischen einem vorrichtungsbasierten Teil einer Steuereinrichtung einer Vorrichtung und der Fernbedienung beendet.

Mit der Beendigung der Kommunikation werden bevorzugt an der wenigstens einen Gesteinsveränderungsvorrichtung alle aktiven Authentifizierungsinformationen deaktiviert.

Die oben genannte Aufgabe wird außerdem gelöst durch einen Maschinensatz aus einer Gesteinsveränderungsvorrichtung und einer drahtlosen Fernbedienung,
wobei die Gesteinsveränderungsvorrichtung als Vorrichtungskomponenten eine Materialaufgabeeinrichtung zur Beladung mit zu verarbeitendem Gesteinsmaterial, wenigstens eine Fördereinrichtung zur Förderung von Material zwischen zwei unterschiedlichen Orten, und eine Steuereinrichtung zur Steuerung wenigstens einer Vorrichtungskomponente der Gesteinsveränderungsvorrichtung umfasst,
wobei die Steuereinrichtung als vorrichtungsbasierter Teil eine mit der Gesteinsveränderungsvorrichtung gekoppelte Vorrichtungs-Datenverarbeitungseinrichtung, eine mit der Vorrichtungs-Datenverarbeitungseinrichtung datenübertragend verbundene Vorrichtungs-Datenausgabeeinrichtung zur human wahrnehmbaren Ausgabe von Daten und eine mit der Vorrichtungs-Datenverarbeitungseinrichtung datenübertragend verbundene Vorrichtungs-Sende- und Empfangseinrichtung zur drahtlosen Übertragung von Daten umfasst,
wobei die drahtlose Fernbedienung eine Fern-Datenverarbeitungseinrichtung, eine mit der Fern-Datenverarbeitungseinrichtung datenübertragend gekoppelte Fern-Dateneingabeeinrichtung zur Eingabe von Daten durch eine Bedienperson und eine mit der Fern-Datenverarbeitungseinrichtung datenübertragend gekoppelte Fern-Sende- und Empfangseinrichtung zur drahtlosen Übertragung von Daten umfasst,
wobei die Gesteinsveränderungsvorrichtung und die drahtlose Fernbedienung zur Authentifizierung der Fernbedienung als temporärer Teil der Steuereinrichtung zur Ausführung des Verfahrens, wie es oben beschrieben und weitergebildet ist, ausgebildet sind.

Bevorzugt ist die Gesteinsveränderungsvorrichtung eine Gesteinsfördervorrichtung oder eine Gesteinsverarbeitungsvorrichtung mit zusätzlich wenigstens einer Arbeitseinrichtung aus einer Brecheinrichtung und einer Siebeinrichtung als wenigstens einer weiteren Vorrichtungskomponente.

Oben zum Verfahren abgegebene Erläuterungen sind auch Erläuterungen des Maschinensatzes, welcher zur Ausführung des Verfahrens ausgebildet ist.

Wie zuvor im Zusammenhang mit dem Verfahren bereits dargelegt, kann ein und dieselbe Fernbedienung sequentiell oder simultan mit mehr als einer Gesteinsveränderungsvorrichtung zur drahtlosen Kommunikation gekoppelt werden, sodass die Fernbedienung dann Teil der Steuereinrichtung auch der weiteren Gesteinsveränderungsvorrichtung ist. In diesem Fall einer bevorzugten Weiterbildung der vorliegenden Erfindung umfasst der Maschinensatz eine weitere Gesteinsveränderungsvorrichtung, wobei die weitere Gesteinsveränderungsvorrichtung als Vorrichtungskomponenten eine weitere Materialaufgabeeinrichtung zur Beladung mit zu verarbeitendem Gesteinsmaterial, wenigstens eine weitere Fördereinrichtung zur Förderung von Material zwischen zwei unterschiedlichen Orten, und eine weitere Steuereinrichtung zur Steuerung von Vorrichtungskomponenten der weiteren Gesteinsveränderungsvorrichtung umfasst,
wobei die weitere Steuereinrichtung als einen vorrichtungsbasierten Teil eine mit der weiteren Gesteinsveränderungsvorrichtung gekoppelte weitere Vorrichtungs-Datenverarbeitungseinrichtung, eine mit der weiteren Vorrichtungs-Datenverarbeitungseinrichtung datenübertragend verbundene weitere Vorrichtungs-Datenausgabeeinrichtung zur human wahrnehmbaren Ausgabe von Daten und eine mit der weiteren Vorrichtungs-Datenverarbeitungseinrichtung datenübertragend verbundene weitere Vorrichtungs-Sende- und Empfangseinrichtung zur drahtlosen Übertragung von Daten umfasst,
wobei die drahtlose Fernbedienung und die weitere Gesteinsveränderungsvorrichtung zur Authentifizierung der bereits an der Gesteinsveränderungsvorrichtung auf Grundlage wenigstens der ersten Authentifizierungsinformation authentifizierten Fernbedienung als ein temporärer Teil der weiteren Steuereinrichtung zur Ausführung der Schritte i. bis vi. mit der Maßgabe ausgebildet sind, dass hierzu an die Stelle einer Einrichtung des vorrichtungsbasierten Teils der Steuereinrichtung in den Schritten i. bis vi. die entsprechende weitere Einrichtung des vorrichtungsbasierten Teils der weiteren Steuereinrichtung der weiteren Gesteinsveränderungsvorrichtung tritt.

Auch die weitere Gesteinsveränderungsvorrichtung kann eine Gesteinsfördervorrichtung oder eine Gesteinsverarbeitungsvorrichtung mit zusätzlich wenigstens einer Arbeitseinrichtung aus einer Brecheinrichtung und einer Siebeinrichtung als wenigstens einer weiteren Vorrichtungskomponente umfassen oder sein.

Die Gesteinsveränderungsvorrichtung und die weitere Gesteinsveränderungsvorrichtung können entsprechend der obigen Erläuterungen bevorzugt als kooperierende Gesteinsveränderungsvorrichtungen steuerungstechnisch einen Anlagenzug bilden.

Ebenso kann gemäß der oben bereits gegebenen detaillierten Erläuterung eine Gesteinsveränderungsvorrichtung mit mehr als einer Fernbedienung drahtlos kommunizieren, sodass mehr als eine Fernbedienung temporärer Teil der Steuereinrichtung der Gesteinsveränderungsvorrichtung ist. Die Fernbedienung umfasst in dieser bevorzugten Weiterbildung eine mit der Fern-Datenverarbeitungseinrichtung datenübertragend gekoppelte Fern-Datenausgabeeinrichtung zur Ausgabe von Daten, wobei der Maschinensatz eine weitere drahtlose Fernbedienung umfasst, wobei die weitere drahtlose Fernbedienung eine weitere Fern-Datenverarbeitungseinrichtung, eine mit der weiteren Fern-Datenverarbeitungseinrichtung datenübertragend gekoppelte Fern-Datenaufnahmeeinrichtung zur Aufnahme von Daten und eine mit der weiteren Fern-Datenverarbeitungseinrichtung datenübertragend gekoppelte weitere Fern-Sende- und Empfangseinrichtung zur drahtlosen Übertragung von Daten umfasst,
wobei die Gesteinsveränderungsvorrichtung, die Fernbedienung und die weitere Fernbedienung zur Ausführung des Verfahrens ausgebildet sind, wie es oben beschrieben und weitergebildet ist.

Eine Bedienperson kann mittels der Fernbedienung über die einmal etablierte drahtlose Kommunikation bevorzugt wenigstens eine Vorrichtungskomponente der Gesteinsveränderungsvorrichtung steuern, d. h. die Vorrichtungskomponente aktivieren oder/und deaktivieren oder/und ihren Betriebszustand ändern.

Bevorzugt dient die auf Grundlage der ersten Authentifizierungsinformation hergestellte drahtlose Kommunikation zwischen der Vorrichtung und der Fernbedienung nur dem Ziel der Etablierung der drahtlosen Kommunikation auf Grundlage der zweiten Authentifizierungsinformation. Deshalb ist es bevorzugt, dass die auf Grundlage der ersten Authentifizierungsinformation zwischen der Vorrichtung und der Fernbedienung hergestellte drahtlose Kommunikation keine Steuerung einer Vorrichtungskomponente durch eine Bedienperson gestattet, mit Ausnahme einer etwaigen Veranlassung der Vorrichtungs-Datenverarbeitungseinrichtung, eine zweite Authentifizierungsinformation zu erzeugen und an die Fernbedienung zu übertragen.

Die vorliegende Erfindung wird nachfolgend anhand der beiliegenden Zeichnungen näher erläutert. Es stellt dar:
- Fig. 1: eine grobschematische Darstellung eines erfindungsgemäßen Maschinensatzes,
- Fig. 2: ein grobschematisches Blockdiagramm eines erfindungsgemäßen Authentifizierungsverfahrens,
- Fig. 3: ein grobschematisches Blockdiagramm einer Weiterbildung des erfindungsgemäßen Authentifizierungsverfahrens zur Authentifizierung einer weiteren Fernbedienung an der Gesteinsveränderungsvorrichtung des Maschinensatzes von Fig. 1, und,
- Fig. 4: die grobschematische Darstellung des erfindungsgemäßen Maschinensatzes von Fig. 1, erweitert um eine weitere Gesteinsveränderungsvorrichtung.

Die Figuren sind nicht maßstabsgetreu, geben jedoch Größenverhältnisse korrekt wieder.

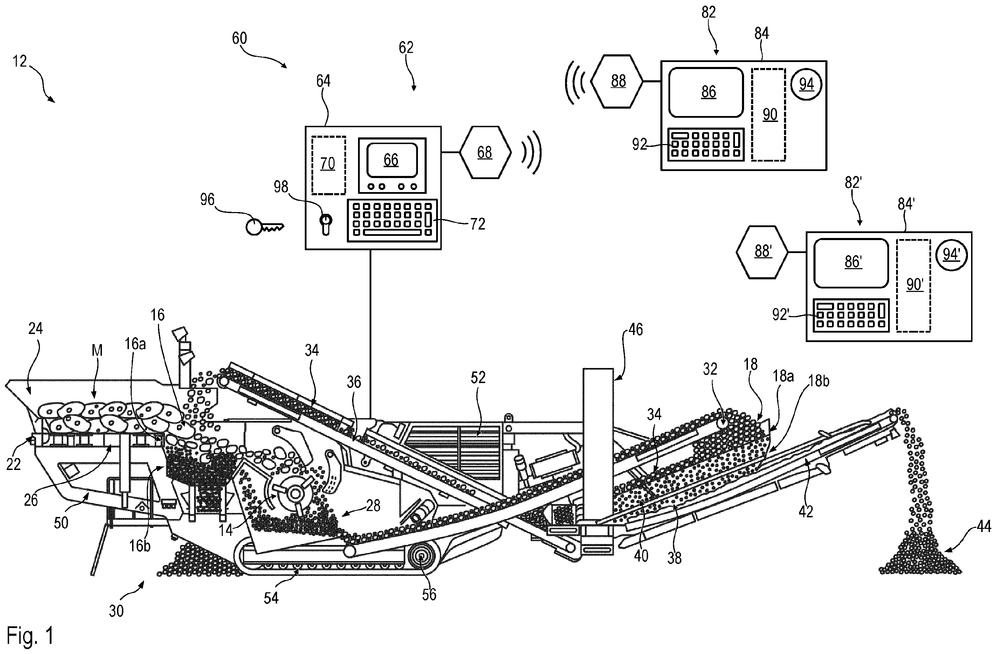

In Figur 1 ist eine Gesteinsveränderungsvorrichtung 12 als Gesteinsverarbeitungsvorrichtung mit einem Prallbrecher 14 als einer Brecheinrichtung und mit einem Vorsieb 16 sowie einem Nachsieb 18 als Siebeinrichtungen. Der Einsatzort der Gesteinsveränderungsvorrichtung 12 ist vorliegend bevorzugt ein Steinbruch, kann jedoch ebenso ein Recyclinghof oder ein Abrissort eines oder mehrerer Bauwerke sein.

Von der Gesteinsveränderungsvorrichtung 12 zu verarbeitendes, also größenmäßig zu sortierendes und zu zerkleinerndes Material M wird von einem nicht dargestellten Bagger als einer Beladevorrichtung der Gesteinsveränderungsvorrichtung 12 in eine Materialaufgabeeinrichtung 22 mit einem trichterförmigen Materialpuffer 24 durch Beladung diskontinuierlich aufgegeben.

Von der Materialaufgabeeinrichtung 22 fördert ein als Rinnenförderer 26 ausgebildeter Vibrationsförderer als eine Fördereinrichtung das Material M zum Vorsieb 16, welches zwei Vorsiebdecks 16a und 16b aufweist. Von diesen weist das obere Vorsiebdeck 16a eine größere Maschenweite auf und scheidet jene Korngrößen ab und führt sie dem Prallbrecher 14 zu, welche gemäß den jeweiligen Vorgaben für das zu erzielende Endkornprodukt einer Zerkleinerung bedürfen.

Durch das obere Vorsiebdeck 16a fallende Körner werden durch das untere Vorsiebdeck 16b weiter sortiert in eine Nutzkorn-Fraktion 28, welche den Spezifikationen des zu erzielenden Endkornprodukts entspricht und in eine Unterkorn-Fraktion 30, welche eine so geringe Korngröße aufweist, dass sie als Wertkorn unbrauchbar ist.

Die im Ausführungsbeispiel dargestellte Anzahl an Halden bzw. Fraktionen ist lediglich beispielhaft. Sie kann größer oder kleiner als im Beispiel angegeben sein. Außerdem kann auch die im vorliegenden Beispiel als Ausschuss erläuterte Unterkorn-Fraktion 30 eine Wertkorn-Fraktion sein, sofern der in der Fraktion 30 anfallende Korngrößenbereich für weitere Verwendungen nutzbar ist.

Die Nutzkorn-Fraktion 28 wird um das vom Prallbrecher 14 ausgegebene gebrochene Material vermehrt und durch eine weitere Fördereinrichtung 32 in Gestalt eines Bandförderers zum Nachsieb 18 gefördert. Das Nachsieb 18 weist im dargestellten Ausführungsbeispiel ebenfalls zwei Siebdecks bzw. Nachsiebdecks 18a und 18b auf, von welchen das obere Nachsiebdeck 18a die größere Maschenweite aufweist. Das obere Nachsiebdeck 18a lässt Wertkorn durch seine Maschen fallen und sortiert eine Überkorn-Fraktion 34 mit einer Korngröße aus, welche größer als die größte gewünschte Korngröße des Wertkorns ist. Die Überkorn-Fraktion 34 wird durch eine Überkorn-Fördereinrichtung 36 in die Materialeingabe des Prallbrechers 14 bzw. in das Vorsieb 16 rückgeführt. Die Überkorn-Fördereinrichtung 36 ist im dargestellten Ausführungsbeispiel als Bandförderer ausgestaltet.

Das Nutzkorn der Nutzkorn-Fraktion 28 umfasst somit Überkorn und Wertkorn. Abweichend von der Darstellung im Ausführungsbeispiel kann beispielsweise die Überkorn-Fördereinrichtung 36 von einem Maschinenrahmen 50 der Gesteinsveränderungsvorrichtung 12 ausgeschwenkt werden, so dass die Überkorn-Fraktion 34 verhaldet wird, anstatt rückgeführt zu werden.

Das durch die Maschen des oberen Nachsiebdecks 18a gefallene Wertkorn wird durch das untere Nachsiebdeck 18b weiter fraktioniert in eine Feinkorn-Fraktion 38 mit kleinerer Korngröße und in eine Mittelkorn-Fraktion 40 mit größerer Korngröße. Die Feinkorn-Fraktion 38 wird durch eine Feinkorn-Austragsfördereinrichtung 42 in Gestalt eines Bandförderers zu einer Feinkorn-Halde 44 aufgeschüttet und verhaldet. Die Mittelkorn-Fraktion 40 wird durch eine Mittelkorn-Austragsfördereinrichtung 46, ebenfalls in Gestalt eines Bandförderers, zu einer in Figur 1 nicht dargestellten Mittelkorn-Halde aufgeschüttet und verhaldet.

Als zentrale Struktur weist die Gesteinsveränderungsvorrichtung 12 den Maschinenrahmen 50 auf, an welchen die genannten Vorrichtungskomponenten unmittelbar oder mittelbar festgelegt bzw. gelagert sind. Als zentrale Kraftquelle weist die Gesteinsveränderungsvorrichtung 12 eine am Maschinenrahmen 50 gelagerte Diesel-Brennkraftmaschine 52 auf, welche die gesamte von der Gesteinsveränderungsvorrichtung 12 verbrauchte Energie erzeugt, sofern sie nicht in Energiespeichern, wie etwa Batterien, gespeichert ist. Zusätzlich kann die Gesteinsveränderungsvorrichtung 12, sofern vorhanden, baustellenseitig an Baustellenstrom angeschlossen sein.

Die Gesteinsveränderungsvorrichtung 12, die Teil einer Gesteinsverarbeitungsanlage mit einer Mehrzahl von in einem gemeinsamen Materialfluss angeordneten Gesteinsveränderungsvorrichtungen sein kann, ist im dargestellten Beispiel eine mobile, genauer selbstfahrende, Gesteinsveränderungsvorrichtung 12 mit einem Raupenfahrwerk 54, welches über Hydromotoren 56 als Antrieb der Gesteinsveränderungsvorrichtung 12 einen selbsttätigen Ortswechsel ohne externe Zugmaschine ermöglicht.

Die Gesteinsveränderungsvorrichtung 12 umfasst einen vorrichtungsbasierten Teil 62 einer Steuereinrichtung 60 der Gesteinsveränderungsvorrichtung 12, beispielsweise in Gestalt einer elektronischen Datenverarbeitungsanlage mit integrierten Schaltkreisen. Der vorrichtungsbasierte Teil 62 der Steuereinrichtung 60 ermöglicht eine Steuerung des Betriebs von Vorrichtungskomponenten. Hierzu kann die Steuereinrichtung 60 beispielsweise unmittelbar Antriebe von Vorrichtungskomponenten ansteuern oder/und Aktuatoren ansteuern, welche wiederum Bauteile bewegen können.

Der vorrichtungsbasierte Teil 62 der Steuereinrichtung 60 umfasst eine Vorrichtungs-Datenverarbeitungseinrichtung 64, eine mit der Vorrichtungs-Datenverarbeitungseinrichtung 64 datenübertragend verbundene Vorrichtungs-Datenausgabeeinrichtung 66 zur human wahrnehmbaren Ausgabe von Daten und eine mit der Vorrichtungs-Datenverarbeitungseinrichtung 64 datenübertragend verbundene Vorrichtungs-Sende- und Empfangseinrichtung 68 zur drahtlosen Übertragung von Daten. Mit der Vorrichtungs-Datenverarbeitungseinrichtung 64 datenübertragend verbunden ist ein Vorrichtungs-Datenspeicher 70 in welchem das Betriebsprogramm des vorrichtungsbasierten Teils 62 der Steuereinrichtung 60 sowie Betriebsdaten gespeichert sind. Im Vorrichtungs-Datenspeicher 70 können während des Betriebs der Gesteinsveränderungsvorrichtung 12 Daten abgespeichert und von diesem abgerufen werden. Zur Eingabe von Daten ist datenübertragend mit der Vorrichtungs-Datenverarbeitungseinrichtung 64 eine Vorrichtungs-Dateneingabeeinrichtung 72 verbunden. Die Vorrichtungs-Datenausgabeeinrichtung 66 umfasst bevorzugt einen Monitor. Die Vorrichtungs-Dateneingabeeinrichtung 72 umfasst bevorzugt Tasten und Schalter bzw. Schaltknöpfe.

Der vorrichtungsbasierte Teil 62 der Steuereinrichtung 60 ist vorliegend eine körperlich mittelbar oder unmittelbar fest mit dem Maschinenrahmen 50 verbundene bordeigene Datenverarbeitungsanlage, etwa mit einem Bedienpult. Der vorrichtungsbasierte Teil 62 der Steuereinrichtung 60 ist dauerhaft Teil der Steuereinrichtung 60.

Als temporärer Teil der Steuereinrichtung 60 kann eine Fernbedienung 82 drahtlos mit dem vorrichtungsbasierten Teil 62 der Steuereinrichtung 60 verbunden werden. Hierzu muss die Fernbedienung 82 gegenüber dem vorrichtungsbasierten Teil 62 der Steuereinrichtung 60 authentifiziert werden.

Die Fernbedienung 82 umfasst eine Fern-Datenverarbeitungseinrichtung 84 mit einer Fern-Datenausgabeeinrichtung 86, einer mit der Fern-Datenverarbeitungseinrichtung 84 datenübertragend verbundenen Fern-Sende- und Empfangseinrichtung 88, einem mit der Fern-Datenverarbeitungseinrichtung 84 datenübertragend verbundenen Fern-Datenspeicher 90 und einer mit der Fern-Datenverarbeitungseinrichtung 84 datenübertragend verbundenen Fern-Dateneingabeeinrichtung 92. Die Fern-Sende- und Empfangseinrichtung 88 ist dazu ausgebildet, direkt mit der Vorrichtungs-Sende- und Empfangseinrichtung 68 Signale zu übertragen, also von der Vorrichtungs-Sende- und Empfangseinrichtung 68 Signale zu empfangen und Signale an diese zu senden. Entsprechendes gilt auch für die Vorrichtungs-Sende- und Empfangseinrichtung 68.

Die Fernbedienung 82 ist körperlich gesondert von der Gesteinsveränderungsvorrichtung 12 und von dem vorrichtungsbasierten Teil 62 der Steuereinrichtung 60 ausgebildet. Die Fernbedienung 82 ist im vorliegenden bevorzugten Fall tragbar, beispielsweise in Gestalt eines Smartphones. Eine einmal hergestellte Kommunikationsverbindung der Fernbedienung 82 mit dem vorrichtungsbasierten Teil 62 der Steuereinrichtung 60 ist bevorzugt die einzige Verbindung mit der Gesteinsveränderungsvorrichtung 12. Bevorzugt ist die Kommunikationsverbindung drahtlos.

Vorübergehend kann die Fernbedienung auch mit einem Kabel, etwa einem USB-Kabel, mit dem vorrichtungsbasierten Teil 62 der Steuereinrichtung 60 verbunden sein.

Die Fernbedienung 82 weist außerdem als Fern-Datenaufnahmevorrichtung 94 eine Kamera auf.

Außerdem kann eine weitere Fernbedienung 82' mit dem vorrichtungsbasierten Teil 62 der Steuereinrichtung 60 zur drahtlosen Kommunikation verbunden werden, um auch durch die weitere Fernbedienung 82' wenigstens eine Vorrichtungskomponente der Gesteinsveränderungsvorrichtung 12 steuern zu können.

Die weitere Fernbedienung 82' ist in gleicher Weise aufgebaut wie die Fernbedienung 82. Wie bereits in der Beschreibungseinleitung sind ihre Komponenten in gleicher Weise bezeichnet wie die Komponenten der Fernbedienung 82, zur Unterscheidung von den Komponenten der Fernbedienung 82 jedoch unter Hinzufügung des Attributs "weitere" bzw. "weiterer". In Abgrenzung der weiteren Fernbedienungskomponenten der weiteren Fernbedienung 82' von jenen der Fernbedienung 82 sind die weiteren Fernbedienungskomponenten mit den gleichen, jedoch apostrophierten Bezugszeichen versehen wie die Fernbedienungskomponenten der Fernbedienung 82.

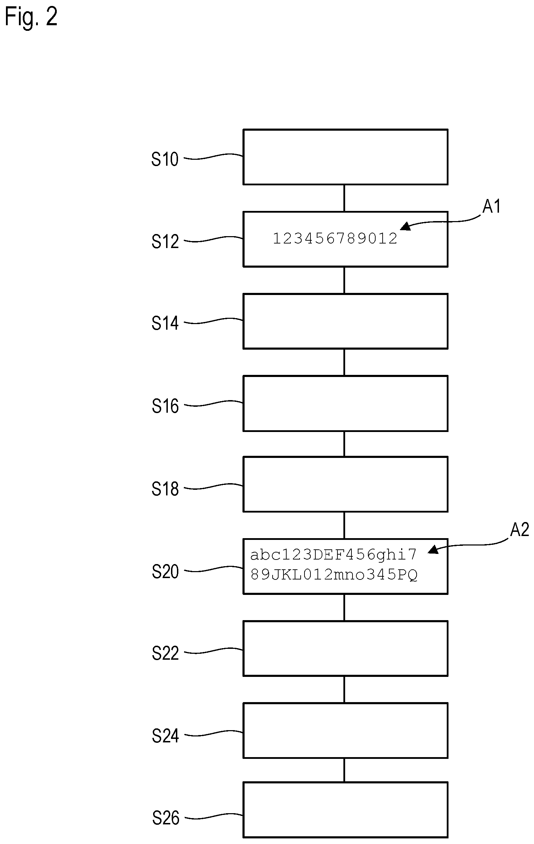

Die zur Authentifizierung der Fernbedienung 82 als temporärer Teil der Steuereinrichtung 60 durchgeführten Verfahrensschritte werden nachfolgend anhand von Figur 2 erläutert.

In Schritt S10 wird die Vorrichtungs-Datenverarbeitungseinrichtung 64 veranlasst, eine erste Authentifizierungsinformation zu erzeugen. Um für die Veranlassung der Erzeugung der ersten Authentifizierungsinformation für eine ausreichende körperliche Anwesenheit einer berechtigten Bedienperson bei der Gesteinsveränderungsvorrichtung 12 zu sorgen, erfolgt das Veranlassen der Erzeugung der ersten Authentifizierungsinformation unter Verwendung eines Schlüssels 96 als eines bedienpersonseitigen Authentifizierungsgeheimnisses und eines Schließzylinders 98 als eines vorrichtungsseitigen Authentifizierungsgeheimnisses. Nur wenn der richtige Schlüssel 96 in den richtigen Schließzylinder 98 eingeführt wird, lässt sich der Zylinderkern relativ zum Zylindergehäuse drehen und dadurch am vorrichtungsbasierten Teil 62 der Steuereinrichtung 60 ein Schalter betätigen, welcher die Erzeugung der ersten Authentifizierungsinformation A1 durch die Vorrichtungs-Datenverarbeitungseinrichtung 64 auslöst.

Anschließend wird gemäß Schritt S12 an der Vorrichtungs-Datenausgabeeinrichtung 66 eine 12-stellige Zeichenfolge als die erzeugte erste Authentifizierungsinformation A1 angezeigt. Die Anzeige kann die Bedienperson, welche die Erzeugung der ersten Authentifizierungsinformation A1 am vorrichtungsbasierten Teil 62 der Steuereinrichtung 60 veranlasst hat, von der Vorrichtungs-Datenausgabeeinrichtung 66 ablesen und gemäß Schritt S14 über die Fern-Dateneingabeeinrichtung 92 in die Fernbedienung 82 eingeben.

Die erste Authentifizierungsinformation A1 enthält Information über eine Adressierung der Vorrichtungs-Sende- und Empfangseinrichtung 68, wie etwa eine Geräte-ID der Vorrichtungs-Sende- und Empfangseinrichtung 68 oder eine Netzwerk-ID des vom vorrichtungsbasierten Teil 62 der Steuereinrichtung 60 verwendeten drahtlosen Netzwerks.

Die erste Authentifizierungsinformation A1 enthält weiter ein Passwort bzw. eine Zeichenkette, mit welchem sich die Fernbedienung 82 gegenüber dem vorrichtungsbasierten Teil 62 der Steuereinrichtung 60 als vertrauenswürdiges Gerät identifizieren kann. Aufgrund ihres im Fern-Datenspeicher 90 gespeicherten Betriebsprogramms kann die Fern-Datenverarbeitungseinrichtung 84 aus der ersten Authentifizierungsinformation A1 die Information über die Adressierung der Vorrichtungs-Sende- und Empfangseinrichtung 68 und das Passwort extrahieren und die an die Vorrichtungs-Sende- und Empfangseinrichtung 68 zu übertragenden Signale so ausgestalten, dass die Vorrichtungs-Datenverarbeitungseinrichtung 64 nach Empfang der Signale diese auf Konformität mit der auch im Vorrichtungs-Datenspeicher 70 der Vorrichtungs-Datenverarbeitungseinrichtung 64 hinterlegten ersten Authentifizierungsinformation A1 überprüfen kann.

Es beginnt nun der Aufbau einer drahtlosen Kommunikation zwischen der Fernbedienung 82 und dem vorrichtungsbasierten Teil 62 der Steuereinrichtung 60 gemäß Schritt S16. Zu diesem Zweck übermittelt die Fernbedienung 82 mittels der Fern-Sende- und Empfangseinrichtung 88 drahtlos Signale an den vorrichtungsbasierten Teil 62 der Steuereinrichtung 60, welcher die Signale mittels der Vorrichtungs-Sende- und Empfangseinrichtung 68 empfängt. Die Vorrichtungs-Datenverarbeitungseinrichtung 64 prüft durch entsprechende Rechenoperationen oder/und durch Vergleich mit im Vorrichtungs-Datenspeicher 70 hinterlegten Bezugsinformationen, ob die von der Fernbedienung 82 erhaltenen Signale die erste Authentifizierungsinformation A1 korrekt wiedergeben. Ist dies der Fall, wird die aufgebaute drahtlose Kommunikation aufrechterhalten. Dieses Aufrechterhalten geschieht gemäß einer sicherheitstechnisch bevorzugten Ausführungsform nur für eine vorbestimmte Dauer, etwa für 1 bis 3 Minuten. Zusätzlich oder alternativ kann die erste Authentifizierungsinformation A1 nach ihrer human wahrnehmbaren Ausgabe durch die Vorrichtungs-Datenausgabeeinrichtung 66 nur für eine vorbestimmte maximale Zeitdauer gültig bleiben, etwa für 1 bis 5 Minuten.

Nach Aufbau der drahtlosen Kommunikation zwischen der Fernbedienung 82 und dem vorrichtungsbasierten Teil 62 der Steuereinrichtung 60 kann eine die Fernbedienung 82 bedienende Bedienperson, vorzugsweise innerhalb der vorbestimmten Zeitdauer der Aufrechterhaltung der drahtlosen Kommunikation, durch Betätigung der Fern-Dateneingabeeinrichtung 92 gemäß Schritt S18 von der Fernbedienung 82 an den vorrichtungsbasierten Teil 62 der Steuereinrichtung 60 ein Signal übertragen, welches die Vorrichtungs-Datenverarbeitungseinrichtung 64 nach Empfang des Signals gemäß Schritt S20 veranlasst, eine zweite Authentifizierungsinformation A2 zu erzeugen. Alternativ kann die Erzeugung der zweiten Authentifizierungsinformation A2 automatisiert nach Aufbau der drahtlosen Kommunikation erfolgen.

Die zweite Authentifizierungsinformation A2 enthält eine größere Anzahl an Zeichen als die erste Authentifizierungsinformation A1, wobei zusätzlich die Zeichen aus einem umfangreicheren Zeichensatz ausgewählt sind als die Zeichen der ersten Authentifizierungsinformation A1. Während beispielsweise die erste Authentifizierungsinformation A1 12 Zeichen enthält, von welchen jedes eine der Ziffern 0 bis 9 ist, kann die zweite Authentifizierungsinformation A2 32 Zeichen umfassen, von welchen jedes aus einem Zeichensatz ausgewählt ist, welcher die Ziffern 0 bis 9, die Kleinbuchstaben a bis z und die Großbuchstaben A bis Z enthält. Ein herkömmlicher ANSI-Buchstabensatz enthält von A bis Z 26 Buchstaben, sodass der Zeichensatz zur Bildung der zweiten Authentifizierungsinformation A2 an jeder ihrer 32 Stellen 62 mögliche unterschiedliche Zeichen zur Auswahl stellt. Damit ist das Sicherheitsniveau der zweiten Authentifizierungsinformation A2 aufgrund der 62³² Möglichkeiten, die zweite Authentifizierungsinformation A2 zu bilden, erheblich höher als das Sicherheitsniveau der ersten Authentifizierungsinformation A1, zu deren Bildung lediglich 10.000.000.000 Möglichkeiten zur Verfügung stehen. Dafür kann die erste Authentifizierungsinformation A1 mit geringerem Fehlerrisiko von einer sie wahrnehmenden, etwa ablesenden, Bedienperson auf die Fernbedienung 82 übertragen werden.

Nach Erzeugung der zweiten Authentifizierungsinformation A2 in Schritt S20 überträgt der vorrichtungsbasierte Teil 62 der Steuereinrichtung 60 die zweite Authentifizierungsinformation A2 durch die Vorrichtungs-Sende- und Empfangseinheit 68 gemäß Schritt S22 zur Fernbedienung 82. Damit verfügen nun der vorrichtungsbasierte Teil 62 der Steuereinrichtung 60 und die Fernbedienung 82 über die gleiche zweite Authentifizierungsinformation auf höherem Sicherheitsniveau. Damit kann die Fernbedienung 82 Teil der Steuereinrichtung 60 der Gesteinsveränderungsvorrichtung 12 sein. Die Fernbedienung 82 kann so lange Teil der Steuereinrichtung 60 sein, bis sie ausgeschaltet wird, abgemeldet wird, ihre Stromversorgung zu Ende geht oder bis erneut die Erzeugung einer ersten Authentifizierungsinformation A1 veranlasst wird.

In einem Schritt S24 kann die Fernbedienung 82 nun eine drahtlose Kommunikation mit dem vorrichtungsbasierten Teil 62 der Sicherheitseinrichtung 60 auf Grundlage der zweiten Authentifizierungsinformation A2 etablieren. Wiederum kann die zweite Authentifizierungsinformation A2 eine Kennung, wie etwa eine Geräte-ID oder Netzwerk-ID enthalten. Beispielsweise kann die Vorrichtungs-Datenverarbeitungseinrichtung 64 mit der Übertragung der zweiten Authentifizierungsinformation A2 an die Fernbedienung 82, gegebenenfalls nach Eingang einer Empfangsbestätigung durch die Fernbedienung 82, die Netzwerk-ID von eine in der ersten Authentifizierungsinformation A1 codierten Netzwerk-ID umstellen auf eine andere in der zweiten Authentifizierungsinformation A2 codierte Netzwerk-ID. Ebenso ist in der zweiten Authentifizierungsinformation A2 bevorzugt ein neues Passwort oder dergleichen kodiert. Beides kann die Fernbedienung 82 wiederum aufgrund ihres im Fern-Datenspeicher 90 enthaltenen Betriebsprogramms dekodieren und ihre an den vorrichtungsbasierten Teil 62 der Steuereinrichtung 60 auf Grundlage der zweiten Authentifizierungsinformation A2 zu übertragenden Signale entsprechend ausgestalten.

Mit der Übertragung der zweiten Authentifizierungsinformation A2 an die Fernbedienung 82 oder nach Eingang der Bestätigung eines erfolgreichen Empfangs derselben durch die Fernbedienung 82 oder durch den Versuch der Fernbedienung 82 mit dem vorrichtungsbasierten Teil 62 der Steuereinrichtung 60 auf Grundlage der zweiten Authentifizierungsinformation A2 eine drahtlose Kommunikation zu etablieren, kann die Vorrichtungs-Datenverarbeitungseinrichtung 64 die erste Authentifizierungsinformation A1 deaktivieren. Im dargestellten Ausführungsbeispiel soll in Schritt S24 der Schritt einer Etablierung einer drahtlosen Kommunikation zwischen dem vorrichtungsbasierten Teil 62 der Steuereinrichtung 60 und der Fernbedienung 82 erfolgen und in Schritt S26 die Deaktivierung der ersten Authentifizierungsinformation A1. Die Reihenfolge kann jedoch auch umgekehrt sein.

Nach der Etablierung einer drahtlosen Kommunikation zwischen dem vorrichtungsbasierten Teil 62 der Steuereinrichtung 60 und der Fernbedienung 82 können einige oder alle Vorrichtungskomponenten der Gesteinsveränderungsvorrichtung 12 durch die Fernbedienung 82 gesteuert werden. Ebenso können Betriebszustände von Vorrichtungskomponenten und Sensorwerte von Betriebssensoren an der Gesteinsveränderungsvorrichtung 12 an der Fernbedienung 82 angezeigt bzw. ausgegeben werden.

Bevorzugt ist eine Steuerung von Vorrichtungskomponenten der Gesteinsveränderungsvorrichtung 12 sowie eine Ausgabe von Betriebszuständen ihrer Vorrichtungskomponenten nur nach Etablierung einer drahtlosen Kommunikation auf Grundlage der zweiten Authentifizierungsinformation A 2, nicht jedoch mit der auf Grundlage der Authentifizierungsinformation A 1 aufgebauten drahtlosen Kommunikation möglich.

Sofern zusätzlich zur Fernbedienung 82 auch die weitere Fernbedienung 82' als temporärer Teil der Steuereinrichtung 60 authentifiziert werden soll, kann dies nicht nach dem Verfahren gemäß Figur 2 erfolgen, denn eine erneute Ausführung des Schritts S10 hätte unmittelbar die Trennung der drahtlosen Kommunikation zwischen dem vorrichtungsbasierten Teil 62 der Steuereinrichtung 60 und der Fernbedienung 82 zur Folge.

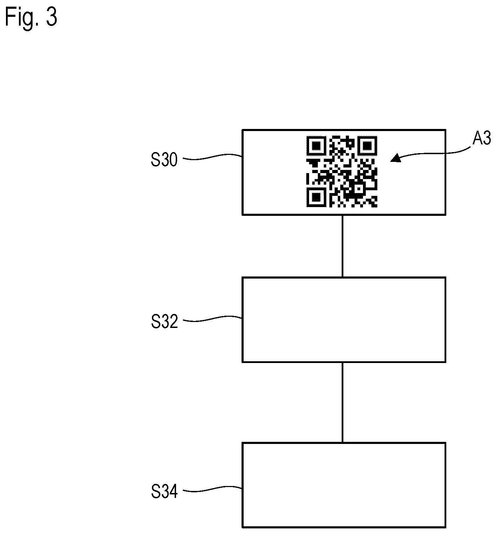

Die Einbindung der weiteren Fernbedienung 82' in die Steuereinrichtung 60 der Gesteinsveränderungsvorrichtung 12 erfolgt daher gemäß den in Figur 3 symbolisch dargestellten weiteren Verfahrensschritten.

Die erste Fernbedienung 82 gibt über ihre Fern-Datenausgabeeinrichtung 86 die zweite Authentifizierungsinformation A2 gemäß Schritt S30 aus, und zwar optisch in codierter Form, etwa als QR-Code. Die optische Ausgabe hat den Vorteil einer sehr kurzen Reichweite der Informationsausgabe, sodass diese nicht unerwünschterweise aus der Distanz abgegriffen werden kann. Die codierte Form hat den Vorteil, dass sie von der weiteren Fernbedienung 82' unmittelbar eingelesen werden kann und nicht durch eine Bedienperson Zeichen für Zeichen eingegeben werden muss. Letzteres kann als Ersatzmaßnahme vorgesehen sein, falls das automatisierte Einlesen, beispielsweise aufgrund eines Defekts der Fern-Datenausgabeeinrichtung 86 oder aufgrund starker Verschmutzung oder Beschädigung der Kamera 94' als der weiteren Fern-Datenaufnahmeeinrichtung nicht funktioniert. Standardmäßig ist die optische Ausgabe in maschinenlesbarer codierter Form bevorzugt.

Die an der Fern-Datenausgabeeinrichtung 86 der Fernbedienung 82 ausgegebene maschinenlesbar codierte Information A3 enthält die zweite Authentifizierungsinformation A2. Sie kann nur die zweite Authentifizierungsinformation A2 enthalten, ist jedoch nicht notwendigerweise auf diese beschränkt. Die maschinenlesbar codierte Information A3 kann zusätzlich zur zweiten Authentifizierungsinformation A2 noch weitere Informationen enthalten, beispielsweise Informationen über die Konfiguration der Gesteinsveränderungsvorrichtung 12 oder/und der Fernbedienung 82.

In Schritt S32 wird die an der Fern-Datenausgabeeinrichtung 86 dargestellte Information A3 wird durch die weitere Fern-Datenaufnahmeeinrichtung 94' der weiteren Fernbedienung 82' eingelesen und an deren weitere Fern-Datenverarbeitungseinrichtung 84' übertragen. Die weitere Fern-Datenverarbeitungseinrichtung 84' decodiert die eingelesene Information A3 und etabliert gemäß Schritt S34 auf Grundlage der decodierten Information A3 einschließlich der zweiten Authentifizierungsinformation A2 eine eigene drahtlose Kommunikation mit dem vorrichtungsbasierten Teil 62 der Steuereinrichtung 60, wodurch auch die weitere Fernbedienung 82' als temporärer Teil der Steuereinrichtung 60 authentifiziert ist.

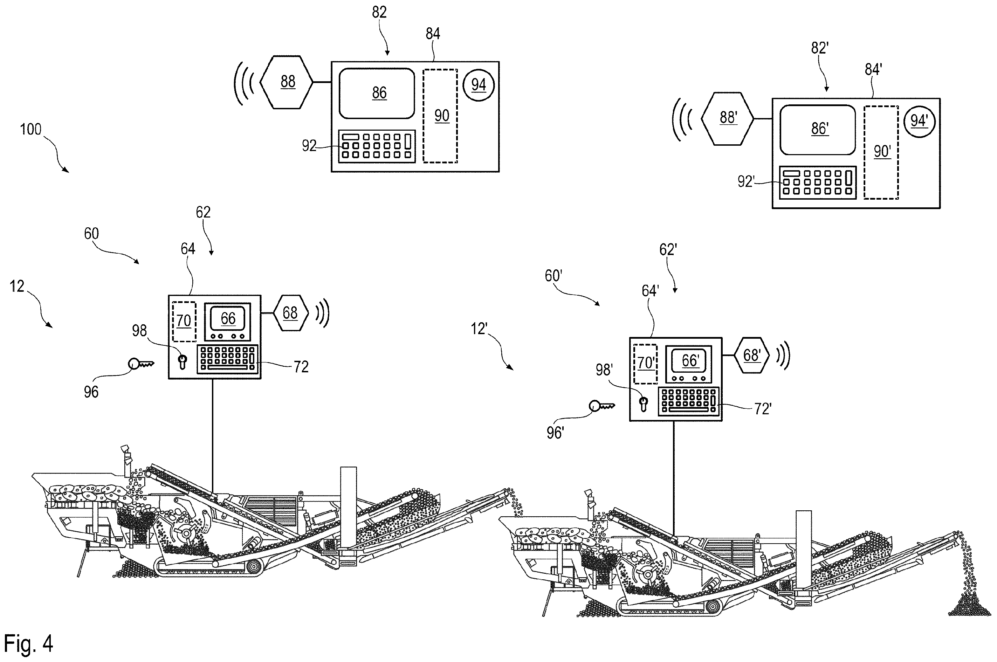

In Figur 4 ist ein Fall von verkettet arbeitenden Gesteinsveränderungsvorrichtungen 12 und 12' dargestellt. Zur Erleichterung der Erläuterung sei die weitere Gesteinsveränderungsvorrichtung 12' und insbesondere deren vorrichtungsbasierter Teil 62' ihrer Steuereinrichtung 60' im Wesentlichen identisch aufgebaut wie die Gesteinsveränderungsvorrichtung 12 und deren vorrichtungsbasierter Teil 62 der Steuereinrichtung 60.

Nachfolgend sei angenommen, dass auch die weitere Gesteinsveränderungsvorrichtung 12' nicht zu einer, etwa in Form eines QR-Codes, codierten Ausgabe einer ausreichend sicheren Authentifizierungsinformation ausgebildet ist. Ansonsten könnte eine dauerhafte Authentifizierung einer Fernbedienung 82 oder/und 82' an der weiteren Gesteinsveränderungsvorrichtung 12' über eine Ausgabe eine codierten Authentifizierungsinformation an der weiteren Gesteinsveränderungsvorrichtung 12' und deren Einlesen durch wenigstens eine der Fernbedienungen 82 oder/und 82' sehr einfach erfolgen.

Soll eine der beiden Fernbedienungen 82 oder 82', für welche bereits eine drahtlose Kommunikation mit der Gesteinsveränderungsvorrichtung 12 durch Ausführung der oben erläuterten Verfahrensschritte etabliert oder etablierbar ist, auch gegenüber der weiteren Gesteinsveränderungsvorrichtung 12' authentifiziert werden, dann wird das Verfahren von Figur 2 unter Beteiligung der weiteren Gesteinsveränderungsvorrichtung 12' erneut ausgeführt. Das Veranlassen einer Erzeugung einer ersten Authentifizierungsinformation in der weiteren Vorrichtungs-Datenverarbeitungseinrichtung 64' führt nicht notwendigerweise zu einer Trennung einer bereits etablierten drahtlosen Kommunikation zwischen der jeweiligen Fernbedienung 82 bzw. 82' und der Gesteinsveränderungsvorrichtung 12, falls diese während der weiteren Authentifizierung der jeweiligen Fernbedienung 82 bzw. 82' an der der weiteren Gesteinsveränderungsvorrichtung 12' besteht, da die Steuereinrichtungen 60 und 60' der Gesteinsveränderungsvorrichtung 12 bzw. der weiteren Gesteinsveränderungsvorrichtung 12' zunächst nicht miteinander kommunizieren.

Unter der Maßgabe, dass die jeweilige weitere Komponente des weiteren vorrichtungsbasierten Teils 62' der weiteren Steuereinrichtung 60' der weiteren Gesteinsveränderungsvorrichtung 12' jene Schritte ausführt, die oben im Zusammenhang mit Figur 2 für eine Komponente des vorrichtungsbasierten Teils 62 der Steuereinrichtung 60 der Gesteinsveränderungsvorrichtung 12 erläutert wurden, kann die Fernbedienung 82 oder/und die weitere Fernbedienung 82' gegenüber der weiteren Gesteinsveränderungsvorrichtung 12' authentifiziert werden und kann eine drahtlose Kommunikation der Fernbedienung 82 oder/und der weiteren Fernbedienung 82' auch mit der weiteren Gesteinsveränderungsvorrichtung 12' etabliert werden, sodass auch die Fernbedienung 82 oder/und die weitere Fernbedienung 82' schließlich eine, mehrere oder alle Vorrichtungskomponenten der weiteren Gesteinsveränderungsvorrichtung 12' steuern und deren Betriebszustände darstellen kann.

Nachdem wenigstens eine Fernbedienung 82 oder/und 82' gegenüber beiden Gesteinsveränderungsvorrichtungen 12 und 12' authentifiziert wurde und eine drahtlose Kommunikation zwischen den Gesteinsveränderungsvorrichtungen 12 und 12' und der wenigstens einen Fernbedienung aus Fernbedienung 82 und 82' etabliert wurde, können die beiden Gesteinsveränderungsvorrichtungen 12 und 12' durch entsprechende Steuerbefehle, sei es eines vorrichtungsseitigen Teils 62 bzw. 62' einer Steuereinrichtung 60 oder 60' oder sei es einer Fernbedienung 82 oder 82', steuerungstechnisch zu einem Anlagenzug 100 zusammengefasst werden.

In diesem Fall beendet die Veranlassung zur Erzeugung einer ersten Authentifizierungsinformation an nur einer der beiden Vorrichtungs-Datenverarbeitungseinrichtungen 64 oder 64' die drahtlose Kommunikation einer jeden Gesteinsveränderungsvorrichtung des Anlagenzugs 100 mit einer jeden authentifizierten Fernbedienung.

Selbstverständlich kann der Anlagenzug 100 mehr als nur zwei Gesteinsveränderungsvorrichtungen 12 und 12' umfassen. Ebenso können mehr als nur zwei Fernbedienungen 82 und 82' zur drahtlosen Kommunikation mit einer Gesteinsveränderungsvorrichtung 12 authentifiziert werden.

## Patentansprüche

1. Verfahren zur Authentifizierung einer drahtlosen Fernbedienung (82) als temporärer Teil einer Steuereinrichtung (60) einer Gesteinsveränderungsvorrichtung (12),
wobei die Gesteinsveränderungsvorrichtung (12) als vorrichtungsbasierter Teil (62) der Steuereinrichtung (60) eine mit der Gesteinsveränderungsvorrichtung (12) gekoppelte Vorrichtungs-Datenverarbeitungseinrichtung (64), eine mit der Vorrichtungs-Datenverarbeitungseinrichtung (64) datenübertragend verbundene Vorrichtungs-Datenausgabeeinrichtung (66) zur human wahrnehmbaren Ausgabe von Daten und eine mit der Vorrichtungs-Datenverarbeitungseinrichtung (64) datenübertragend verbundene Vorrichtungs-Sende- und Empfangseinrichtung (68) zur drahtlosen Übertragung von Daten umfasst,
wobei die drahtlose Fernbedienung (82) eine Fern-Datenverarbeitungseinrichtung (84), eine mit der Fern-Datenverarbeitungseinrichtung (84) datenübertragend gekoppelte Fern-Dateneingabeeinrichtung (92) zur Eingabe von Daten durch eine Bedienperson und eine mit der Fern-Datenverarbeitungseinrichtung (84) datenübertragend gekoppelte Fern-Sende- und Empfangseinrichtung (88) zur drahtlosen Übertragung von Daten umfasst,
wobei das Verfahren die folgenden Schritte umfasst:
i. Veranlassen der Vorrichtungs-Datenverarbeitungseinrichtung (64), eine erste Authentifizierungsinformation (A1) mit niedrigerem Sicherheitsniveau zu erzeugen (S10),
ii. Human wahrnehmbare Ausgabe der ersten Authentifizierungsinformation (A1) an der Vorrichtungs-Datenausgabeeinrichtung (66) (S12),
iii. Eingeben der ersten Authentifizierungsinformation (A1) in die Fern-Dateneingabeeinrichtung (92) durch eine Bedienperson (S14),
iv. Aufbau einer drahtlosen Kommunikation mit dem vorrichtungsbasierten Teil (62) der Steuereinrichtung (60) durch die Fernbedienung (82) auf Grundlage der ersten Authentifizierungsinformation (A1) (S16),
v. Nach Herstellung der drahtlosen Kommunikation: Erzeugen einer zweiten Authentifizierungsinformation (A2) mit höherem Sicherheitsniveau durch die Vorrichtungs-Datenverarbeitungseinrichtung (64) (S20),
vi. Drahtloses Übertragen der zweiten Authentifizierungsinformation (A2) an die Fernbedienung (82) (S22).

2. Verfahren nach Anspruch 1,
**dadurch gekennzeichnet, dass** das Verfahren nach Ausführung des Schritts vi. (S22) folgende weitere Schritte umfasst:
vii. Etablieren einer drahtlosen Kommunikation zwischen der Fernbedienung (82) und dem vorrichtungsbasierten Teil (62) der Steuereinrichtung (60) auf Grundlage der zweiten Authentifizierungsinformation (A2) (S24),
viii. Deaktivieren der ersten Authentifizierungsinformation (A1) (S26).

3. Verfahren nach Anspruch 1 oder 2,
**dadurch gekennzeichnet, dass** die Veranlassung einer Erzeugung der ersten Authentifizierungsinformation (A1) eine Prüfung einer Kompatibilität eines bedienpersonseitigen Authentifizierungsgeheimnisses (96) mit einem vorrichtungsseitigen Authentifizierungsgeheimnis (98) umfasst.

4. Verfahren nach einem der vorhergehenden Ansprüche,
**dadurch gekennzeichnet, dass** das Verfahren zwischen dem Schritt iv. (S16) und dem Schritt v. (S20) einen Schritt (S18) einer Übertragung eines Anforderungssignals von der Fernbedienung (82) an den vorrichtungsbasierten Teil (62) der Steuereinrichtung (60) umfasst, wobei das Erzeugen einer zweiten Authentifizierungsinformation (A2) mit höherem Sicherheitsniveau durch die Vorrichtungs-Datenverarbeitungseinrichtung (64) in Schritt v. (S20) nur nach Eingang des Anforderungssignals bei der Vorrichtungs-Datenverarbeitungseinrichtung (64) ausgeführt wird.

5. Verfahren nach einem der vorhergehenden Ansprüche,
**dadurch gekennzeichnet, dass** die Fernbedienung (82) eine mit der Fern-Datenverarbeitungseinrichtung (84) datenübertragend gekoppelte Fern-Datenausgabeeinrichtung (86) zur Ausgabe von Daten umfasst, wobei das Verfahren die folgenden weiteren Schritte umfasst:
a. Ausgeben der zweiten Authentifizierungsinformation (A2, A3) mittels der Fern-Datenausgabeeinrichtung (86) der Fernbedienung (82) (S30),
b. Einlesen der zweiten Authentifizierungsinformation (A2, A3) mittels einer weiteren Fern-Datenaufnahmeeinrichtung (94') einer weiteren drahtlosen Fernbedienung (82') (S32), wobei die weitere drahtlose Fernbedienung (82') eine weitere Fern-Datenverarbeitungseinrichtung (84'), die mit der weiteren Fern-Datenverarbeitungseinrichtung (84') datenübertragend gekoppelte weitere Fern-Datenaufnahmeeinrichtung (94')' zur Aufnahme von Daten und eine mit der weiteren Fern-Datenverarbeitungseinrichtung (84') datenübertragend gekoppelte weitere Fern-Sende- und Empfangseinrichtung (88') zur drahtlosen Übertragung von Daten umfasst, und
c. Etablieren einer drahtlosen Kommunikation zwischen der weiteren Fernbedienung (82') und dem vorrichtungsbasierten Teil (62) der Steuereinrichtung (60) auf Grundlage der zweiten Authentifizierungsinformation (A2).

6. Verfahren nach Anspruch 5,
**dadurch gekennzeichnet, dass** die Fern-Datenausgabeeinrichtung (86) der Fernbedienung (82) die zweite Authentifizierungsinformation in nur einen beschränkten Raumbereich hinein ausgibt, so dass sie nur von der weiteren Fern-Datenaufnahmeeinrichtung (94') eingelesen werden kann, wenn diese sich in dem beschränkten Raumbereich befindet.

7. Verfahren nach einem der vorhergehenden Ansprüche,
**dadurch gekennzeichnet, dass** die die Schritte i. (S10) bis vi. (S22) zur Authentifizierung der an der Gesteinsveränderungsvorrichtung (12) auf Grundlage wenigstens der ersten Authentifizierungsinformation (A1) authentifizierten Fernbedienung (82) als temporärer Teil einer weiteren Steuereinrichtung (60') einer weiteren Gesteinsveränderungsvorrichtung (12') ausgeführt werden, wobei die weitere Gesteinsveränderungsvorrichtung (12') als vorrichtungsbasierter Teil (62') ihrer weiteren Steuereinrichtung (60') eine mit der weiteren Gesteinsveränderungsvorrichtung (12') gekoppelte weitere Vorrichtungs-Datenverarbeitungseinrichtung (64'), eine mit der weiteren Vorrichtungs-Datenverarbeitungseinrichtung (64') datenübertragend verbundene weitere Vorrichtungs-Datenausgabeeinrichtung (66') zur human wahrnehmbaren Ausgabe von Daten und eine mit der weiteren Vorrichtungs-Datenverarbeitungseinrichtung (64') datenübertragend verbundene weitere Vorrichtungs-Sende- und Empfangseinrichtung (68') zur drahtlosen Übertragung von Daten umfasst, wobei hierzu an die Stelle einer Einrichtung des vorrichtungsbasierten Teils (62) der Steuereinrichtung (60) in den Schritten i. (S10) bis vi. (S22) die entsprechende weitere Einrichtung des vorrichtungsbasierten Teils (62') der weiteren Steuereinrichtung (60') tritt.

8. Verfahren nach Anspruch 7,
**dadurch gekennzeichnet, dass** die Fernbedienung (82) und der vorrichtungsbasierte Teil (62) der weiteren Steuereinrichtung (60) die Schritte vii. (S24) und viii. (S26) mit der Maßgabe ausführen, dass an die Stelle des vorrichtungsbasierten Teils (62) der Steuereinrichtung (60) der vorrichtungsbasierte Teil (62') der weiteren Steuereinrichtung (60') tritt.

9. Verfahren nach Anspruch 8,
**dadurch gekennzeichnet, dass** das Verfahren den Schritt einer Bildung eines Anlagenzugs (100) aus den mit der Fernbedienung (82) auf Grundlage der jeweiligen zweiten Authentifizierungsinformationen (A2) drahtlos kommunizierenden Vorrichtungen: der Gesteinsveränderungsvorrichtung (12) und der weiteren Gesteinsveränderungsvorrichtung (12'), umfasst.

10. Verfahren nach einem der vorhergehenden Ansprüche,
**dadurch gekennzeichnet, dass** es den Schritt einer Trennung der zwischen der Fernbedienung (82) und der Gesteinsveränderungsvorrichtung (12) bestehenden drahtlosen Kommunikation auf Eintritt eines vorbestimmten Auflösungsereignisses hin umfasst.

11. Verfahren nach Anspruch 10,
**dadurch gekennzeichnet, dass** das Veranlassen einer Erzeugung einer ersten Authentifizierungsinformation gemäß Schritt i. (S10) ein vorbestimmtes Auflösungsereignis ist.

12. Maschinensatz aus einer Gesteinsveränderungsvorrichtung (12) und einer drahtlosen Fernbedienung (82),
wobei die Gesteinsveränderungsvorrichtung (12) als Vorrichtungskomponenten eine Materialaufgabeeinrichtung (22) zur Beladung mit zu verarbeitendem Gesteinsmaterial (M), wenigstens eine Fördereinrichtung (26, 32, 36, 42, 46) zur Förderung von Material zwischen zwei unterschiedlichen Orten, und eine Steuereinrichtung (60) zur Steuerung des Betriebs wenigstens einer Vorrichtungskomponente der Gesteinsveränderungsvorrichtung (12) umfasst, wobei die Steuereinrichtung (60) als vorrichtungsbasierter Teil (62) eine mit der Gesteinsveränderungsvorrichtung (12) gekoppelte Vorrichtungs-Datenverarbeitungseinrichtung (64), eine mit der Vorrichtungs-Datenverarbeitungseinrichtung (64) datenübertragend verbundene Vorrichtungs-Datenausgabeeinrichtung (66) zur human wahrnehmbaren Ausgabe von Daten und eine mit der Vorrichtungs-Datenverarbeitungseinrichtung (64) datenübertragend verbundene Vorrichtungs-Sende- und Empfangseinrichtung (68) zur drahtlosen Übertragung von Daten umfasst,
wobei die drahtlose Fernbedienung (82) eine Fern-Datenverarbeitungseinrichtung (84), eine mit der Fern-Datenverarbeitungseinrichtung (84) datenübertragend gekoppelte Fern-Dateneingabeeinrichtung (92) zur Eingabe von Daten durch eine Bedienperson und eine mit der Fern-Datenverarbeitungseinrichtung (84) datenübertragend gekoppelte Fern-Sende- und Empfangseinrichtung (88) zur drahtlosen Übertragung von Daten umfasst,
wobei die Gesteinsveränderungsvorrichtung (12) und die drahtlose Fernbedienung (82) zur Authentifizierung der Fernbedienung (82) als temporärer Teil der Steuereinrichtung (60) zur Ausführung des Verfahrens nach einem der Ansprüche 1 bis 4 und 7 bis 11, sofern die Ansprüche 7 bis 11 auf einen der Ansprüche 1 bis 4 rückbezogen sind, ausgebildet sind.

13. Maschinensatz nach Anspruch 12,
**dadurch gekennzeichnet, dass** der Maschinensatz eine weitere Gesteinsveränderungsvorrichtung (12') umfasst, wobei die weitere Gesteinsveränderungsvorrichtung (12') als Vorrichtungskomponenten eine weitere Materialaufgabeeinrichtung zur Beladung mit zu verarbeitendem Gesteinsmaterial, wenigstens eine weitere Fördereinrichtung zur Förderung von Material zwischen zwei unterschiedlichen Orten, und eine weitere Steuereinrichtung (60') zur Steuerung des Betriebs wenigstens einer Vorrichtungskomponente der weiteren Gesteinsveränderungsvorrichtung (12') umfasst,
wobei die weitere Steuereinrichtung (60') als vorrichtungsbasierter Teil (62') eine mit der weiteren Gesteinsveränderungsvorrichtung (12') gekoppelte weitere Vorrichtungs-Datenverarbeitungseinrichtung (64'), eine mit der weiteren Vorrichtungs-Datenverarbeitungseinrichtung (64') datenübertragend verbundene weitere Vorrichtungs-Datenausgabeeinrichtung (66') zur human wahrnehmbaren Ausgabe von Daten und eine mit der weiteren Vorrichtungs-Datenverarbeitungseinrichtung (64') datenübertragend verbundene weitere Vorrichtungs-Sende- und Empfangseinrichtung (68') zur drahtlosen Übertragung von Daten umfasst,
wobei die drahtlose Fernbedienung (82) und die weitere Gesteinsveränderungsvorrichtung (12') zur Authentifizierung der bereits an der Gesteinsveränderungsvorrichtung (12) auf Grundlage wenigstens der ersten Authentifizierungsinformation (A1) authentifizierten Fernbedienung als temporärer Teil der weiteren Steuereinrichtung (60') zur Ausführung der die Schritte i. (S10) bis vi. (S22) mit der Maßgabe ausgebildet sind, dass hierzu an die Stelle einer Einrichtung des vorrichtungsbasierten Teils (62) der Steuereinrichtung (60) in den Schritten i. (S10) bis vi. (S22) die entsprechende weitere Einrichtung des vorrichtungsbasierten Teils (62') der weiteren Steuereinrichtung (60') der weiteren Gesteinsveränderungsvorrichtung (12') tritt.

14. Maschinensatz nach Anspruch 13,
**dadurch gekennzeichnet, dass** die Gesteinsveränderungsvorrichtung (12) und die weitere Gesteinsveränderungsvorrichtung (12') einen Anlagenzug (100) bilden.

15. Maschinensatz nach einem der Ansprüche 12 bis 14,
**dadurch gekennzeichnet, dass** die Fernbedienung (82) eine mit der Fern-Datenverarbeitungseinrichtung (84) datenübertragend gekoppelte Fern-Datenausgabeeinrichtung (86) zur Ausgabe von Daten umfasst, wobei der Maschinensatz eine weitere drahtlose Fernbedienung (82') umfasst, wobei die weitere drahtlose Fernbedienung (82') eine weitere Fern-Datenverarbeitungseinrichtung (84'), eine mit der weiteren Fern-Datenverarbeitungseinrichtung (84') datenübertragend gekoppelte weitere Fern-Datenaufnahmeeinrichtung (94') zur Aufnahme von Daten und eine mit der weiteren Fern-Datenverarbeitungseinrichtung (84') datenübertragend gekoppelte weitere Fern-Sende- und Empfangseinrichtung (88') zur drahtlosen Übertragung von Daten umfasst, wobei die Gesteinsveränderungsvorrichtung (12), die Fernbedienung (82) und die weitere Fernbedienung (82') zur Ausführung des Verfahrens gemäß dem Anspruch 5 oder 6 ausgebildet sind.

## Claims

1. A method for the authentication of a wireless remote control (82) as a temporary part of a control device (60) of a rock modification apparatus (12), wherein the rock modification apparatus (12) comprises as an apparatus-based part (62) of the control device (60) an apparatus data processing device (64) connected to the rock modification apparatus (12), an apparatus data output device (66) connected in data-transmitting fashion to the apparatus data processing device (64) for the humanly perceptible output of data, and an apparatus transmitting and receiving device (68) connected in data-transmitting fashion to the apparatus data processing device (64) for the wireless transmission of data,
wherein the wireless remote control (82) comprises a remote data processing device (84), a remote data input device (92) connected in data-transmitting fashion to the remote data processing device (84) for the input of data by an operator, and a remote transmitting and receiving device (88) connected in data-transmitting fashion to the remote data processing device (84) for the wireless transmission of data,
wherein the method comprises the following steps:
i. Prompting the apparatus data processing device (64) to generate a first item of authentication information (A1) with a lower security level (S10),
ii. Humanly perceptible output of the first item of authentication information (A1) on the apparatus data output device (66) (S12),
iii. Input of the first item of authentication information (A1) into the remote data input device (92) by an operator (S14),
iv. Setup of a wireless communication with the apparatus-based part (62) of the control device (60) by the remote control (82) on the basis of the first item of authentication information (A1) (S16),
v. Following the establishment of the wireless communication: Generation of a second item of authentication information (A2) with a higher security level by the apparatus data processing device (64) (S20),
vi. Wireless transmission of the second item of authentication information (A2) to the remote control (82) (S22).

2. The method as recited in Claim 1,
**characterized in that** after the execution of step vi. (S22), the method comprises the following further steps:
vii. Establishing a wireless communication between the remote control (82) and the apparatus-based part (62) of the control device (60) on the basis of the second item of authentication information (A2) (S24),
viii. Deactivating the first item of authentication information (A1) (S26).

3. The method as recited in Claim 1 or 2,
**characterized in that** the prompting of a generation of the first item of authentication information (A1) comprises checking a compatibility of an authentication secret (96) on the side of the operator with an authentication secret (98) on the side of the apparatus.

4. The method as recited in one of the preceding claims,
**characterized in that** between step iv. (S16) and step v. (S20), the method comprises a step (S18) of a transmission of a request signal from the remote control (82) to the apparatus-based part (62) of the control device (60), wherein the generation of a second item of authentication information (A2) with a higher security level is carried out by the apparatus data processing device (64) in step v. (S20) only upon receipt of the request signal at the apparatus data processing device (64).

5. The method as recited in one of the preceding claims,
**characterized in that** the remote control (82) comprises a remote data output device (86) connected in data-transmitting fashion to the remote data processing device (84) for the output of data, wherein the method comprises the following further steps:
a. Outputting the second item of authentication information (A2, A3) using the remote data output device (86) of the remote control (82) (S30),
b. Reading in the second item of authentication information (A2, A3) using a further remote data intake device (94') of a further wireless remote control (82') (S32), wherein the further wireless remote control (82') comprises a further remote data processing device (84'), the further remote data intake device (94') connected in data-transmitting fashion to the further remote data processing device (84') for taking in data, and a further remote transmitting and receiving device (88') connected in data-transmitting fashion to the further remote data processing device (84') for the wireless transmission of data, and
c. Establishing a wireless communication between the further remote control (82') and the apparatus-based part (62) of the control device (60) on the basis of the second item of authentication information (A2).

6. The method as recited in Claim 5,
**characterized in that** the remote data output device (86) of the remote control (82) outputs the second item of authentication information only into a limited spatial area, so that it can only be read in by the further remote data intake device (94') when the latter is located in the limited spatial area.

7. The method as recited in one of the preceding claims,
**characterized in that** the steps i. (S10) to vi. (S22) are carried out for the authentication of the remote control (82) authenticated on the rock modification apparatus (12) on the basis of the first item of authentication information (A1) as a temporary part of a further control device (60') of a further rock modification apparatus (12'), wherein the further rock modification apparatus (12') comprises as an apparatus-based part (62') of its further control device (60') a further apparatus data processing device (64') connected to the further rock modification apparatus (12'), a further apparatus data output device (66') connected in data-transmitting fashion to the further apparatus data processing device (64') for the humanly perceptible output of data, and a further apparatus transmitting and receiving device (68') connected in data-transmitting fashion to the further apparatus data processing device (64') for the wireless transmission of data, wherein for this purpose a setup of the apparatus-based part (62) of the control device (60) in the steps i. (S10) to vi. (S22) is replaced with the corresponding further setup of the apparatus-based part (62') of the further control device (60').

8. The method as recited in Claim 7,
**characterized in that** the remote control (82) and the apparatus-based part (62) of the further control device (60') carry out the steps vii. (S24) and viii. (S26) with the provision that the apparatus-based part (62) of the control device (60) is replaced with the apparatus-based part (62') of the further control device (60').

9. The method as recited in Claim 8,
**characterized in that** the method comprises the step of a formation of a plant train (100) from the apparatuses of the rock modification apparatus (12) and the further rock modification apparatus (12') communicating wirelessly with the remote control (82) on the basis of the respective second item of authentication information (A2).

10. The method as recited in one of the preceding claims,
**characterized in that** the method comprises the step of a severance of the wireless communication existing between the remote control (82) and the rock modification apparatus (12) in response to the occurrence of a predetermined dissolution event.

11. The method as recited in Claim 10,
**characterized in that** the prompting of a generation of a first item of authentication information in accordance with step i. (S10) is a predetermined dissolution event.

12. A machine set of a rock modification apparatus (12) and a wireless remote control (82),
wherein the rock modification apparatus (12) comprises as apparatus components a material feed device (22) for loading rock material (M) to be processed, at least one conveyor device (26, 32, 36, 42, 46) for conveying material between two different locations, and a control device (60) for controlling the operation of at least one apparatus component of the rock modification apparatus (12),
wherein the control device (60) as an apparatus-based part (62) comprises an apparatus data processing device (64) connected to the rock modification apparatus (12), an apparatus data output device (66) connected in data-transmitting fashion to the apparatus data processing device (64) for the humanly perceptible output of data, and an apparatus transmitting and receiving device (68) connected in data-transmitting fashion to the apparatus data processing device (64) for the wireless transmission of data,
wherein the wireless remote control (82) comprises a remote data processing device (84), a remote data input device (92) connected in data-transmitting fashion to the remote data processing device (84) for the input of data by an operator, and a remote transmitting and receiving device (88) connected in data-transmitting fashion to the remote data processing device (84) for the wireless transmission of data,
wherein the rock modification apparatus (12) and the wireless remote control (82) are designed for the authentication of the remote control (82) as a temporary part of the control device (60) for carrying out the method according to one of claims 1 to 4 and 7 to 11, provided that claims 7 to 11 are related back to one of claims 1 to 4.

13. The machine set as recited in Claim 12,
**characterized in that** the machine set comprises a further rock modification apparatus (12'), wherein the further rock modification apparatus (12') comprises as apparatus components a further material feed device for loading rock material to be processed, at least one further conveyor device for conveying material between two different locations, and a further control device (60') for controlling the operation of at least one apparatus component of the further rock modification apparatus (12'),
wherein the further control device (60') comprises as an apparatus-based part (62') a further apparatus data processing device (64') connected to the further rock modification apparatus (12'), a further apparatus data output device (66') connected in data-transmitting fashion to the further apparatus data processing device (64') for the humanly perceptible output of data, and a further apparatus transmitting and receiving device (68') connected in data-transmitting fashion to the further apparatus data processing device (64') for the wireless transmission of data,
wherein, for the purpose of authenticating the remote control, which is already authenticated on the rock modification apparatus (12) on the basis of at least the first item of authentication information (A1), as a temporary part of the further control device (60'), the wireless remote control (82) and the further rock modification apparatus (12') are designed to perform the steps i. (S10) to vi. (S22) with the provision that for this purpose a setup of the apparatus-based part (62) of the control device (60) in the steps i. (S10) to vi. (S22) is replaced with the corresponding further setup of the apparatus-based part (62') of the further control device (60') of the further rock modification apparatus (12').

14. The machine set as recited in Claim 13,
**characterized in that** the rock modification apparatus (12) and the further rock modification apparatus (12') form one plant train (100).

15. The machine set as recited in one of Claims 12 to 14,
**characterized in that** the remote control (82) comprises a remote data output device (86) connected in data-transmitting fashion to the remote data processing device (84) for outputting data, wherein the machine set comprises a further wireless remote control (82'), wherein the further wireless remote control (82') comprises a further remote data processing device (84'), a remote data intake device (94') connected in data-transmitting fashion to the further data processing device (84') for taking in data, and a further remote transmitting and receiving device (88') connected in data-transmitting fashion to the further remote data processing device (84') for the wireless transmission of data,
wherein the rock modification apparatus (12), the remote control (82) and the further remote control (82') are designed to carry out the method according to Claim 5 or 6.

## Revendications

1. Procédé d'authentification d'une télécommande sans fil (82) en tant que partie temporaire d'un dispositif de commande (60) d'un dispositif de modification de roche (12),
le dispositif de modification de roche (12) comprenant, en tant que partie à base de dispositif (62) du dispositif de commande (60), un dispositif de traitement de données de dispositif (64) couplé au dispositif de modification de roche (12), un dispositif de sortie de données (66) relié au dispositif de traitement de données (64) de manière à transmettre des données pour la sortie de données perceptibles par l'homme, et un dispositif d'émission et de réception (68) relié au dispositif de traitement de données (64) de manière à transmettre des données sans fil de données,
la télécommande sans fil (82) comprenant un dispositif de traitement de données à distance (84), un dispositif d'entrée de données à distance (92) couplé de manière à transmettre des données au dispositif de traitement de données à distance (84) pour la saisie de données par un opérateur, et un dispositif d'émission et de réception à distance (88) couplé de manière à transmettre des données au dispositif de traitement de données à distance (84) pour la transmission sans fil de données,
le procédé comprenant les étapes suivantes :
i. Déclenchement du dispositif de traitement de données (64) pour générer une première information d'authentification (A1) de niveau de sécurité inférieur (S10),
ii. Sortie perceptible par l'homme des premières informations d'authentification (A1) au niveau du dispositif de sortie de données (66) (S12),
iii. Saisie des premières informations d'authentification (A1) dans le dispositif de saisie de données à distance (92) par un opérateur (S14),
iv. Établissement d'une communication sans fil avec la partie à base de dispositif (62) du dispositif de commande (60) par la télécommande (82) sur la base de la première information d'authentification (A1) (S16),
v. Une fois la communication sans fil établie : génération d'une deuxième information d'authentification (A2) avec un niveau de sécurité plus élevé par le dispositif de traitement des données (64) (S20),
vi. Transmission sans fil des deuxièmes informations d'authentification (A2) à la télécommande (82) (S22).

2. Procédé selon la revendication 1,
**caractérisé en ce que** le procédé comprend les étapes supplémentaires suivantes après l'exécution de l'étape vi. (S22) :
vii. établissement d'une communication sans fil entre la télécommande (82) et la partie à base de dispositif (62) du dispositif de commande (60) sur la base des deuxièmes informations d'authentification (A2) (S24),
viii. désactiver les premières informations d'authentification (A1) (S26).

3. Procédé selon la revendication 1 ou 2,
**caractérisé en ce que** le déclenchement de la génération des premières informations d'authentification (A1) comprend la vérification de la compatibilité d'un secret d'authentification côté utilisateur (96) avec un secret d'authentification côté dispositif (98).

4. Procédé selon l'une des revendications précédentes,
**caractérisé en ce que** le procédé comprend, entre l'étape iv. (S16) et l'étape v. (S20), une étape (S18) de transmission d'un signal de demande depuis la télécommande (82) vers la partie à base de dispositif (62) du dispositif de commande (60), la génération d'une deuxième information d'authentification (A2) avec un niveau de sécurité plus élevé par le dispositif de traitement de données (64) dans l'étape v. (S20) n'est effectuée qu'après réception du signal de demande par le dispositif de traitement de données (64).

5. Procédé selon l'une des revendications précédentes,
**caractérisé en ce que** la télécommande (82) comprend un dispositif de sortie de données à distance (86) couplé de manière à transmettre des données au dispositif de traitement de données à distance (84), le procédé comprenant les étapes supplémentaires suivantes :
a. sortie des deuxièmes informations d'authentification (A2, A3) au moyen du dispositif de sortie de données à distance (86) de la télécommande (82) (S30),
b. lecture des secondes informations d'authentification (A2, A3) au moyen d'un autre dispositif de réception de données à distance (94') d'une autre télécommande sans fil (82') (S32), l'autre télécommande sans fil (82') comprenant un autre dispositif de traitement de données à distance (84'), un autre dispositif de réception de données à distance (94') couplé à l'autre dispositif de traitement de données à distance (84') de manière à transmettre des données pour recevoir des données et un autre dispositif d'émission et de réception à distance (88') couplé à l'autre dispositif de traitement de données à distance (84') de manière à transmettre des données sans fil, et
c. établissement une communication sans fil entre l'autre télécommande (82') et la partie à base de dispositif (62) du dispositif de commande (60) sur la base des deuxièmes informations d'authentification (A2).

6. Procédé selon la revendication 5,
**caractérisé en ce que** le dispositif de sortie de données à distance (86) de la télécommande (82) transmet les deuxièmes informations d'authentification uniquement dans une zone spatiale limitée, de sorte qu'elles ne peuvent être lues que par l'autre dispositif de réception de données à distance (94') lorsqu'il se trouve dans la zone spatiale limitée.

7. Procédé selon l'une des revendications précédentes,
**caractérisé en ce que** les étapes i. (S10) à vi. (S22) pour l'authentification de la télécommande (82) authentifiée au niveau du dispositif de modification de la roche (12) sur la base au moins de la première information d'authentification (A1) sont exécutées en tant que partie temporaire d'un autre dispositif de commande (60') d'un autre dispositif de modification de roche (12'), l'autre dispositif de modification de roche (12') comprenant comme partie à base de dispositif (62') de son autre dispositif de commande (60') un autre dispositif de traitement de données (64') couplé à l'autre dispositif de modification de roche (12'), un autre dispositif de sortie de données (66') relié de manière à transmettre des données à l'autre dispositif de traitement de données (64') pour la sortie de données perceptibles par l'homme et un autre dispositif d'émission et de réception de données (68') relié de manière à transmettre des données à l'autre dispositif de traitement de données (64') de manière à transmettre des données sans fil, dans lequel, à cet effet, à la place d'un dispositif de la partie à base de dispositif (62) du dispositif de commande (60), dans les étapes i. (S10) à vi. (S22), le correspondant autre dispositif de la partie à base de dispositif (62') de l'autre dispositif de commande (60') est utilisé.

8. Procédé selon la revendication 7,
**caractérisé en ce que** la télécommande (82) et la partie à base de dispositif (62) de l'autre dispositif de commande (60) exécutent les étapes vii. (S24) et viii. (S26) à condition que la partie base à de dispositif (62') de l'autre dispositif de commande (60') remplace la partie à base de dispositif (62) du dispositif de commande (60).

9. Procédé selon la revendication 8,
**caractérisé en ce que** le procédé comprend l'étape consistant à former un train d'installations (100) à partir des dispositifs communiquant sans fil avec la télécommande (82) sur la base des deuxièmes informations d'authentification respectives (A2) : du dispositif de modification de roche (12) et de l'autre dispositif de modification de roche (12').

10. Procédé selon l'une des revendications précédentes,
**caractérisé en ce qu'**il comprend l'étape consistant à interrompre la communication sans fil entre la télécommande (82) et le dispositif de modification de roche (12) lors de la survenue d'un événement de résolution prédéterminé.

11. Procédé selon la revendication 10,
**caractérisé en ce que** le fait de déclencher la génération d'une première information d'authentification conformément à l'étape i. (S10) est un événement de résolution prédéterminé.

12. Ensemble de machines composé d'un dispositif de modification de roches (12) et d'une télécommande sans fil (82),
le dispositif de modification de roche (12) comprenant, en tant que composants du dispositif, un dispositif d'alimentation en matériau (22) pour le chargement du matériau rocheux (M) à traiter, au moins un dispositif de transport (26, 32, 36, 42, 46) pour transporter des matériaux entre deux endroits différents, et un dispositif de commande (60) pour commander le fonctionnement d'au moins un composant du dispositif de modification de roche (12),
le dispositif de commande (60) comprenant, en tant que partie à base de dispositif (62), un dispositif de traitement de données du dispositif (64) couplé au dispositif de modification de roche (12), un dispositif de sortie de données du dispositif (66) couplé de manière à transmettre des données au dispositif de traitement de données du dispositif (64) pour la sortie de données perceptibles par l'homme, et un dispositif de sortie de données du dispositif (68) couplé de manière à transmettre des données au dispositif de traitement de données du dispositif (64) de manière à transmettre des données sans fil, la télécommande sans fil (82) comprenant un dispositif de traitement de données à distance (84), un dispositif d'entrée de données à distance (92) couplé au dispositif de traitement de données à distance (84) de manière à transmettre des données, pour la saisie de données par un opérateur, et un dispositif d'émission et de réception à distance (88) couplé au dispositif de traitement de données à distance (84) de manière à transmettre des données sans fil,
le dispositif de modification de roche (12) et la télécommande sans fil (82) pour l'authentification de la télécommande (82) en tant que partie temporaire du dispositif de commande (60) étant conçus pour l'exécution du procédé selon l'une des revendications 1 à 4 et 7 à 11, dans la mesure où les revendications 7 à 11 se réfèrent à l'une des revendications 1 à 4.

13. Ensemble de machines selon la revendication 12,
**caractérisé en ce que** l'ensemble de machines comprend un autre dispositif de modification de roches (12'), l'autre dispositif de modification de roches (12') comprend comme composants de dispositif un autre dispositif d'alimentation en matériau pour le chargement avec le matériau rocheux à traiter, au moins un autre dispositif de transport pour le transport de matériau entre deux emplacements différents, et un autre dispositif de commande (60') pour commander le fonctionnement d'au moins un composant de dispositif de l'autre dispositif de modification de roche (12'),
l'autre dispositif de commande (60') comprenant, en tant que partie à base de dispositif (62'), un autre dispositif de traitement de données (64') couplé à l'autre dispositif de modification de roche (12'), un autre dispositif de sortie de données (66') couplé à l'autre dispositif de traitement de données (64') de manière à transmettre des données, pour la sortie de données perceptibles par l'homme, et un autre dispositif d'émission et de réception de données (68') relié à l'autre dispositif de traitement de données (64') de manière à transmettre des données sans fil,
la télécommande sans fil (82) et l'autre dispositif de modification de roche (12') pour authentifier la télécommande déjà authentifiée au niveau du dispositif de modification de roche (12) sur la base d'au moins les premières informations d'authentification (A1) en tant que partie temporaire de l'autre dispositif de commande (60') pour exécuter les étapes i. (S10) à vi. (S22) étant conçues de telle sorte qu'à cet effet, à la place d'un dispositif de la partie à base de dispositif (62) du dispositif de commande (60) dans les étapes i. (S10) à vi. (S22), le correspondant autre dispositif de la partie à base de dispositif (62') de l'autre dispositif de commande (60') de l'autre dispositif de modification de roche (12') est utilisé.

14. Ensemble de machines selon la revendication 13,
**caractérisé en ce que** le dispositif de modification de roche (12) et l'autre dispositif de modification de roche (12') forment un train d'installations (100).

15. Ensemble de machines selon l'une des revendications 12 à 14, **caractérisé en ce que** la télécommande (82) comprend un dispositif de sortie de données à distance (86) couplé de manière à transmettre des données au dispositif de traitement de données à distance (84) pour la sortie de données, l'ensemble de machines comprenant une autre télécommande sans fil (82'), l'autre télécommande sans fil (82') comprenant un autre dispositif de traitement de données à distance (84'), un autre dispositif de réception de données à distance (94') couplé de manière à transmettre des données à l'autre dispositif de traitement de données à distance (84') pour recevoir des données, et un autre dispositif d'émission et de réception de données à distance (88') couplé de manière à transmettre des données à l'autre dispositif de traitement de données à distance (84') pour la transmission de données sans fil,
le dispositif de modification de roche (12), la télécommande (82) et l'autre télécommande (82') sont conçus pour exécuter le procédé selon la revendication 5 ou 6.
